(19) Europäisches Patentamt
European Patent Office
Office européen des brevets

(11) EP 2 166 028 B1

(12) **EUROPEAN PATENT SPECIFICATION**

(45) Date of publication and mention of the grant of the patent:
**08.08.2012 Bulletin 2012/32**

(21) Application number: **08765797.9**

(22) Date of filing: **24.06.2008**

(51) Int Cl.:
***C08F 220/00*** (2006.01) ***C04B 24/26*** (2006.01)
***C08F 2/30*** (2006.01) ***C08L 25/04*** (2006.01)
***C08L 29/02*** (2006.01) ***C08L 33/00*** (2006.01)

(86) International application number:
**PCT/JP2008/061453**

(87) International publication number:
**WO 2009/008260 (15.01.2009 Gazette 2009/03)**

(54) **AQUEOUS SYNTHETIC-RESIN EMULSION FOR CEMENT MORTAR ADMIXTURE, RE-EMULSIFIABLE POWDER FOR CEMENT MORTAR ADMIXTURE FROM AQUEOUS SYNTHETIC-RESIN EMULSION, AND CEMENT MORTAR ADMIXTURE COMPRISING THE SAME**

WÄSSRIGE KUNSTHARZEMULSION FÜR ZEMENTMÖRTELZUSATZMITTEL, REEMULGIERBARES PULVER FÜR ZEMENTMÖRTELZUSATZMITTEL AUS WÄSSRIGER KUNSTHARZEMULSION UND ZEMENTMÖRTELZUSAMMENSETZUNG DAMIT

EMULSION AQUEUSE DE RÉSINE SYNTHÉTIQUE POUR UN MÉLANGE DE MORTIER DE CIMENT, POUDRE RÉ-ÉMULSIFIABLE POUR UN MÉLANGE DE MORTIER DE CIMENT PROVENANT D'UNE ÉMULSION AQUEUSE DE RÉSINE SYNTHÉTIQUE ET MÉLANGE DE MORTIER AU CIMENT COMPORTANT CELLE-CI

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **10.07.2007 JP 2007181238**
**12.07.2007 JP 2007183205**
**27.12.2007 JP 2007336932**
**27.12.2007 JP 2007336933**

(43) Date of publication of application:
**24.03.2010 Bulletin 2010/12**

(73) Proprietor: **The Nippon Synthetic Chemical Industry Co., Ltd.**
**Osaka-shi, Osaka 530-0018 (JP)**

(72) Inventor: **SUGAYA, Mamoru**
**Ogaki-shi**
**Gifu 503-0973 (JP)**

(74) Representative: **Isarpatent**
**Patent- und Rechtsanwälte**
**Postfach 44 01 51**
**80750 München (DE)**

(56) References cited:
**JP-A- 2004 285 143** **JP-A- 2005 042 036**
**JP-A- 2005 330 394** **JP-A- 2005 330 394**
**JP-A- 2006 124 682** **JP-A- 2006 124 682**
**JP-A- 2006 241 448**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to an aqueous synthetic resin emulsion for a cement admixture which is prepared by copolymerizing a specific functional group-containing monomer with at least one of an acrylic monomer and a styrene monomer in the presence of a specific polyvinyl alcohol resin (hereinafter sometimes referred to simply as "PVA") employed as a protective colloid for stable dispersion, a re-emulsifiable aqueous synthetic resin emulsion powder for a cement mortar admixture, and a cement mortar admixture employing the same.

### BACKGROUND ART

Conventionally, a PVA resin is used as a protective colloid agent in order to impart an aqueous synthetic resin emulsion with mechanical stability and freezing stability. In this case, however, the aqueous synthetic resin emulsion is unsatisfactory in polymerization stability though its mechanical stability and freezing stability are improved. Particularly, where the aqueous synthetic resin emulsion has a high nonvolatile content, such as containing a resin component in proportion of greater than 50 wt%, polymerization is impossible.

Therefore, where the PVA resin is used as a protective colloid agent for an aqueous synthetic resin emulsion to be prepared by polymerizing at least one of an acrylic monomer and a styrene monomer, the proportion of the resin component in the aqueous synthetic resin emulsion should be less than 50 wt%, leading to problems associated with productivity. Further, the resulting aqueous synthetic resin emulsion is less stable, and its viscosity is increased over time.

It is known that the aqueous synthetic resin emulsion containing the PVA resin as the protective colloid agent is used as an admixture for a cement mortar. However, if the aqueous synthetic resin emulsion is admixed with the cement mortar, the fluidity of the cement mortar is reduced over time, thereby reducing the workability.

Therefore, there is a demand for development of a PVA protective colloid agent which permits proper polymerization even if a resin component is present in a proportion of 50 wt% or higher in an aqueous synthetic resin emulsion when a PVA resin is used as the protective colloid agent for the aqueous synthetic resin emulsion, and development of an aqueous synthetic resin emulsion which, even if being admixed with a cement mortar, ensures that the cement mortar is free from reduction in fluidity and workability.

On the other hand, a re-emulsifiable aqueous synthetic resin emulsion powder is produced by drying (e.g., spray-drying) the aqueous synthetic resin emulsion. The re-emulsifiable aqueous synthetic resin emulsion powder is easier to handle than the aqueous synthetic resin emulsion, because the former is in a powdery form. The powdery form allows for paper bag packaging of a product and, therefore, is convenient for storage and transportation. The re-emulsifiable aqueous synthetic resin emulsion powder can be re-dispersed and emulsified in water simply by adding the aqueous synthetic resin emulsion powder to water and stirring the resulting mixture for use. Therefore, re-emulsifiable aqueous synthetic resin emulsion powders are used as formulated admixtures to be admixed with cement mortar products such as cements and mortars and with plaster products, as binders for adhesives and paints for woody parts and woody materials, and as soil modification binders. Particularly, aqueous synthetic resin emulsion powders can be premixed with inorganic hydraulic compositions for cement mortar products and plaster products, so that the cement mortar products and the plaster products can be prepared simply by adding water to the inorganic hydraulic compositions in situ.

Most of the known aqueous synthetic resin emulsion powders re-emulsifiable in water are each generally produced by drying an aqueous synthetic resin emulsion prepared through emulsion polymerization, with the use of a water-soluble polymer such as a PVA resin as a protective colloid due to the need for re-emulsification. Therefore, such an aqueous synthetic resin emulsion powder provides insufficient film water resistance. Particularly, a cement mortar product or a plaster product admixed with the emulsion powder for modification thereof is unsatisfactory in wet adhesive strength and other properties.

To cope with this, there is a demand for development of a re-emulsifiable aqueous synthetic resin emulsion powder which, when being re-emulsified in water, easily restores its original synthetic resin emulsion state and, when being admixed with a cement mortar product or a plaster product for the modification of the product, ensures that the product is satisfactory in wet adhesive strength and other properties and, when being admixed with a cement mortar, ensures that the cement mortar is free from reduction in fluidity and workability.

An exemplary approach to this problem is to use a PVA resin containing an acetoacetyl ($CH_3COCH_2CO$-) group or a modified PVA resin as an emulsification dispersant as proposed and disclosed in a variety of patent documents.

For example, Patent Document 1 discloses an aqueous emulsion in which a PVA having an active hydrogen group in the form of an acetoacetate group, a mercapto group or a diacetone acrylamide group, and having a block character [η] of greater than 0.6, a saponification degree of greater than 95.0 mol% and a suppressed blocking property is attached to a polymer, and states that the aqueous emulsion is excellent in mechanical stability, freezing stability and high-temperature storage stability.

Patent Document 2 discloses a method of polymerizing an ethylene unsaturated monomer through emulsion polymerization, in which a modified PVA resin produced as containing an ethylene sulfonic acid alkali salt by saponifying a copolymer of vinyl acetate and the ethylene sulfonic acid alkali salt is used as an emulsifier, and states that the resulting emulsion has little change in viscosity over time, and is excellent in storage stability and other properties.

Patent Document 3 discloses an emulsion polymerization stabilizer which comprises a modified PVA resin having an average saponification degree of not greater than 90 mol% and a sulfonic group content of 0.1 to 20 mol%.

Patent Document 4 discloses a styrene emulsification stabilizer which comprises a modified PVA resin containing hydrocarbon groups having 4 or more carbon atoms and sulfonic groups or sulfate groups or sulfate groups on its side chains, and states that an emulsion resulting from emulsification has excellent stability and a proper viscosity and is usable as an adhesive, a cement mortar admixture or the like.

However, although the aqueous emulsion disclosed in Patent Document 1 is excellent in mechanical strength, freezing stability and high-temperature storage stability, it is unsatisfactory in long-term viscosity stability. Further, the emulsion stabilizers disclosed in Patent Documents 2 to 4 are insufficient in polymerization stability and poor in mechanical stability with a low graft ratio. Therefore, these emulsion stabilizers are unsatisfactory for use in cement mortar admixture applications due to insufficient admixing stability.

As stated in these documents related to aqueous synthetic resin emulsions, when the nonvolatile content is increased to 50% or more for commercial use of the aqueous synthetic resin emulsions, it is difficult to ensure both the still-state viscosity stability and the mechanical stability attributable to a higher graft ratio. Where cement or mortar is used immediately after being admixed with such a synthetic resin emulsion, the cement and the mortar are excellent in fluidity and workability. However, where the cement or the mortar is used after a lapse of a certain period of time from the admixing, the cement and the mortar suffer from reduction in fluidity and workability.

Further, Patent Document 5 proposes that a PVA resin containing an acetoacetyl ($CH_3COCH_2CO$-) group is used as an emulsion dispersant for a re-emulsifiable aqueous synthetic resin emulsion powder. However, this emulsion dispersant is not satisfactory.

JP2006124682 discloses the use of polyvinyl alcohol containing 1,2-diol functionality as emulsifier in the polymerisation of unsaturated monomers. JP 2005330394 discloses resin emulsions and the corresponding powders as cement admixtures for mortar compositions.

Therefore, it is desirable to provide a re-emulsifiable aqueous synthetic resin emulsion powder that exhibits improved properties in re-emulsification and improved film water resistance. Particularly, there is a demand for development of a re-emulsifiable aqueous synthetic resin emulsion powder which, when being admixed with a cement mortar, ensures that the cement mortar is improved in fluidity and workability and is free from reduction in fluidity and workability over time.

Patent Document 1: JP-A-2003-277419
Patent Document 2: JP-A-SHO50(1975)-155579
Patent Document 3: JP-A-HEI10(1998)-060015
Patent Document 4: JP-A-SHO58(1983)-063706
Patent Document 5: JP3225150

## DISCLOSURE OF THE INVENTION

### PROBLEMS TO BE SOLVED BY THE INVENTION

It is an object of the present invention to provide an aqueous emulsion of a synthetic resin such as an acrylic resin and/or a styrene resin for a cement mortar admixture, and a re-emulsifiable aqueous synthetic resin emulsion powder for a cement mortar admixture which, when being each used as a cement mortar admixture, ensure that the resulting cement mortar is excellent in fluidity and workability and has little variations in properties and an improved adhesive strength, and to provide a cement mortar admixture employing the same.

### MEANS FOR SOLVING THE PROBLEMS

As a result of intensive studies in view of the foregoing, the inventor of the present invention found that, where a dispersion prepared by stably dispersing a synthetic resin comprising a copolymer of at least one monomer (A) selected from an acrylic monomer and a styrene monomer, and a specific functional-group containing monomer (B) in the presence of a protective colloid agent of a PVA resin [I] having an average saponification degree of not less than 85 mol% and an average polymerization degree of 50 to 3000 and having 1 to 15 mol% 1,2-diol bonds on its side chains, is used as a cement mortar admixture, ensures that the resulting cement mortar admixture is excellent in fluidity and workability and has little variations in properties and an improved adhesive strength. Thus, the inventor attained the present invention.

The present invention relates to an aqueous synthetic resin emulsion for a cement mortar admixture, which

comprises a synthetic resin comprising a copolymer of at least one monomer (A) selected from an acrylic monomer and a styrene monomer, and at least one functional group-containing monomer (B) selected from the group consisting of:

(B1) a glycidyl-containing monomer;
(B2) an allyl-containing monomer;
(B3) a hydrolyzable silyl-containing monomer;
(B4) an acetoacetyl-containing monomer;
(B5) a monomer having at least two vinyl groups in a molecular structure thereof; and
(B6) a hydroxyl-containing monomer,

the synthetic resin being stably dispersed in the emulsion in the presence of a polyvinyl alcohol resin [I] having an average saponification degree of not less than 85 mol% and an average polymerization degree of 50 to 3000 and having 1 to 15 mol% 1,2-diol bonds on its side chains. The present invention further relates to a re-emulsifiable aqueous synthetic resin emulsion powder for a cement mortar admixture.

The inventive aqueous synthetic resin emulsion for the cement mortar admixture is preferably obtained through emulsion polymerization by employing, as a protective colloid agent, a polyvinyl alcohol resin [I] having an average saponification degree of not less than 85 mol% and an average polymerization degree of 50 to 3000 and having 1 to 15 mol% 1,2-diol bonds on its side chains and employing, as comonomers, at least one monomer (A) selected from an acrylic monomer and a styrene monomer and at least one functional group-containing monomer (B) selected from the group consisting of the components (B1) to (B6).

According to the present invention, there is also provided a cement mortar admixture which comprises the aqueous synthetic resin emulsion for the cement mortar admixture or the aqueous synthetic resin emulsion powder for the cement mortar admixture.

EFFECTS OF THE INVENTION

Where the aqueous synthetic resin emulsion for the cement mortar admixture or the re-emulsifiable aqueous synthetic resin emulsion powder for the cement mortar admixture according to the present invention is used as the cement mortar admixture, the cement mortar admixture is highly effective, i.e., ensures that the resulting cement mortar is excellent in fluidity and workability, and has little variations in properties and an improved adhesive strength. Therefore, the aqueous synthetic resin emulsion and the re-emulsifiable aqueous synthetic resin emulsion powder are useful as modifiers for repairing mortars, base conditioning materials, self-leveling materials, tile bonding mortars and plaster materials in cement mortar applications.

BEST MODE FOR CARRYING OUT THE INVENTION

The present invention will hereinafter be described in detail.

In the present invention, a PVA resin [I] is used, which has an average saponification degree of not less than 85 mol% and an average polymerization degree of 50 to 3000, and has 1 to 15 mol% 1,2-diol bonds on its side chains. The PVA resin [I] has proper reactivity with comonomers and excellent polymerization stability, thereby easily providing an aqueous synthetic resin emulsion having a high nonvolatile content. The provision of the aqueous synthetic resin emulsion having a higher nonvolatile content reduces transport costs, improves the dryability of the aqueous synthetic resin emulsion, and saves a heat energy required for spray drying.

The PVA resin [I] having 1, 2-diol bonds on its side chains for use in the present invention is known, and a typical example thereof is a PVA resin having a 1,2-diol structural unit represented by the following general formula (1):

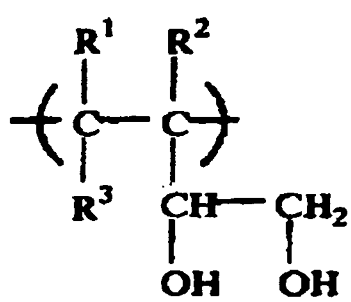

(1)

wherein $R^1$, $R^2$ and $R^3$ are independently a hydrogen atom or an alkyl group.

The PVA resin [I] is prepared, for example, by: (a) saponifying a copolymer of vinyl acetate and 3,4-diacetoxy-1-butene; (b) saponifying and decarbonating a copolymer of vinyl acetate and vinyl ethylene carbonate; (c) saponifying and deketalizing a copolymer of vinyl acetate and a 2,2-dialkyl-4-vinyl-1,3-dioxolane; or (d) saponifying a copolymer of vinyl acetate and glycerol monoallyl ether.

In the present invention, the average saponification degree of the PVA resin [I] is not less than 85 mol%, preferably 90 to 99.8 mol%. If the average saponification degree is less than the aforementioned range, the stability in the polymerization for the aqueous synthetic resin emulsion is liable to be reduced and, even if the polymerization is completed, the resulting aqueous synthetic resin emulsion tends to have poorer storage stability. This makes it difficult to provide a stable aqueous synthetic resin emulsion.

In the present invention, the average saponification degree is determined through measurement performed in a conventional manner. For example, the average saponification degree can be determined in conformity with "Calculation of Saponification Degree" specified in JIS K6726.

The average polymerization degree of the PVA resin [I] is 50 to 3000, preferably 100 to 1700, more preferably 100 to 1000, particularly preferably 200 to 500. If the average polymerization degree is less than the aforementioned range, it is difficult to industrially manufacture the PVA resin. If the average polymerization degree is greater than the aforementioned range, the aqueous synthetic resin emulsion tends to have an excessively high viscosity and lower polymerization stability.

In the present invention, the average polymerization degree is determined through measurement performed in a conventional manner. For example, the average polymerization degree can be determined in conformity with "Calculation of Average Polymerization Degree" specified in JIS K6726.

The amount of the 1,2-diol bonds present on the side chains of the PVA resin [I] is 1 to 15 mol%, preferably 1 to 12 mol%, more preferably 2 to 10 mol%, particularly preferably 2 to 8 mol%. If the amount of the 1, 2-diol bonds is less than the aforementioned range, the aqueous synthetic resin emulsion tends to be poorer in mechanical stability and film water resistance. If the amount of the 1,2-diol bonds is greater than the aforementioned range, the polymerization stability tends to be reduced, making it difficult to provide an aqueous synthetic resin emulsion having a higher nonvolatile content.

In the present invention, the amount of the PVA resin [I] to be used as a protective colloid agent (dispersion stabilizer) is preferably 3 to 20 parts by weight (hereinafter referred to simply as "parts"), more preferably 4 to 15 parts, particularly preferably 5 to 10 parts, based on 100 parts of the total comonomers to be used. If the use amount of the PVA resin [I] is too small, the polymerization stability tends to be reduced in the presence of an insufficient amount of the protective colloid in the emulsion polymerization. If the use amount of the PVA resin [I] is too great, the aqueous synthetic resin emulsion tends to have a higher viscosity, resulting in poorer stability.

Here, all the amount of the PVA resin [I] is generally present in the aqueous synthetic resin emulsion prepared by the polymerization. That is, the PVA resin [I] is present in the emulsion in a proportion of 3 to 20 parts, preferably 4 to 15 parts, more preferably 5 to 10 parts, based on 100 parts of the copolymer.

In the present invention, the PVA resin [I] having the 1,2-diol bonds on its side chains is used as the protective colloid agent (dispersion stabilizer). Further, a partly or completely saponified PVA resin of a modified or non-modified type may be used in combination with the PVA resin [I], as long as the object of the present invention is not impaired.

In the present invention, the PVA resin [I] is typically prepared in the form of an aqueous solution by employing an aqueous medium, and the aqueous solution of the PVA resin [I] is used for the emulsion polymerization. The aqueous medium herein means water or an alcohol-containing solvent which mainly contains water. The aqueous medium is preferably water.

The amount of the PVA resin [I] in the aqueous solution (the nonvolatile content) is desirably 5 to 30 wt%, particularly desirably 5 to 20 wt%, for easy handling.

In the present invention, a PVA resin containing an anionic group may be used in combination with the PVA resin [I]. Examples of the anionic groups include a sulfonic group, a carboxylic group and a phosphoric group, among which the sulfonic group is preferred because electrical charge repulsion can be stably provided irrespective of the pH of the emulsion.

In the present invention, the PVA resin means a non-modified PVA or a PVA modified, for example, with any of various modification compounds (other than modification compounds having 1,2-diol bonds in the present invention), and the modified PVA typically has a modification degree of not greater than 20 mol%, preferably not greater than 15 mol%, more preferably not greater than 10 mol%.

Examples of the modification compounds include: olefins such as ethylene, propylene, isobutylene, $\alpha$-octene, $\alpha$-dodecene and $\alpha$-octadecene; unsaturated acids such as acrylic acid, methacrylic acid, crotonic acid, maleic acid, maleic anhydride and itaconic acid, and salts and monoalkyl or dialkyl esters of these unsaturated acids; nitriles such as acrylonitrile and methacrylonitrile; amides such as acrylamide and methacrylamide; olefin sulfonic acids such as ethylene sulfonic acid, allylsulfonic acid and methallylsulfonic acid, and salts of the olefin sulfonic acids; alkyl vinyl ethers; polyoxyalkylene (meth) allyl ethers such as polyoxyethylene (meth) allyl ethers and polyoxypropylene (meth)allyl ethers;

polyoxyalkylene (meth)acrylates such as polyoxyethylene (meth)acrylates and polyoxypropylene (meth)acrylates; polyoxyalkylene (meth)acrylamides such as polyoxyethylene (meth)acrylamides and polyoxypropylene (meth)acrylamides; and polyoxyethylene [1-(meth)acrylamide-1,1-dimethylpropyl] esters, polyoxyethylene vinyl ethers, polyoxypropylene vinyl ethers, polyoxyethylene allylamines, polyoxypropylene allylamines, polyoxyethylene vinylamines, polyoxypropylene vinylamines, N-acrylamide methyl trimethylammonium chloride, allyltrimethylammonium chloride, dimethyldiallylammonium chloride, dimethyl allyl vinyl ketone, N-vinyl pyrrolidone, vinyl chloride and vinylidene chloride. Other examples of the modification compounds include acetoacetyl modification compounds, mercapto modification compounds and diacetone acrylamide modification compounds each having active hydrogen.

Next, an aqueous synthetic resin emulsion in which a synthetic resin is stably dispersed in the presence of the PVA resin [I] having the 1,2-diol bonds on its side chains will be described.

The inventive aqueous synthetic resin emulsion contains a copolymer of at least one monomer (A) selected from an acrylic monomer and a styrene monomer, and a specific functional group-containing monomer (B).

Examples of the acrylic monomer include aliphatic (meth)acrylates such as methyl (meth)acrylate, ethyl (meth) acrylate, n-butyl (meth)acrylate, i-butyl (meth)acrylate, t-butyl (meth)acrylate, 2-ethylhexyl (meth)acrylate, cyclohexyl (meth)acrylate, lauryl (meth)acrylate, octyl (meth)acrylate and stearyl (meth)acrylate, aromatic (meth)acrylates such as phenoxy(meth)acrylate, and trifluoroethyl (meth)acrylate, which may be used either alone or in combination. Among these, (meth)acrylates including an alkyl group having 1 to 18 carbon atoms, preferably 1 to 10 carbon atoms, more preferably 1 to 8 carbon atoms, are preferred.

In the present invention, the term "(meth)acrylate" means acrylate or methacrylate, and the term "(meth)acryl" means acryl or methacryl.

Examples of the styrene monomer include styrene and α-methylstyrene, which may be used either alone or in combination.

Among the aforementioned monomers, a combination of at least one of methyl methacrylate and styrene whose homopolymers each have a higher glass transition temperature and at least one of n-butyl acrylate and 2-ethylhexyl acrylate whose homopolymers each have a lower glass transition temperature is particularly advantageous, because the combination ensures easier copolymerization and these monomers are generally used for paints and adhesive agents.

In the present invention, the copolymerization of at least one monomer (A) selected from the acrylic monomer and the styrene monomer and the specific functional group-containing monomer (B) in the emulsion polymerization is advantageous because, where the resulting emulsion is used as a cement mortar admixture, the cement mortar admixture is highly effective for the reduction of the variations in properties and the improvement of the adhesive strength.

The functional group-containing monomer (B) is preferably at least one selected from the group consisting of:

(B1) a glycidyl-containing monomer;
(B2) an allyl-containing monomer;
(B3) a hydrolyzable silyl-containing monomer;
(B4) an acetoacetyl-containing monomer;
(B5) a monomer having at least two vinyl groups in a molecular structure thereof; and
(B6) a hydroxyl-containing monomer.

Specific examples of the glycidyl-containing monomer (B1) include glycidyl (meth)acrylate, glycidyl (meth)allyl ether and 3,4-epoxycyclohexyl (meth) acrylate, among which glycidyl (meth) acrylate is preferred from the viewpoint of the reduction of the variations in properties and the improvement of the wet adhesive strength.

Specific examples of the allyl-containing monomer (B2) include monomers, such as triallyloxyethylene, diallyl maleate, triallyl cyanurate, triallyl isocyanurate and tetraallyloxyethane, each having two or more allyl groups, allyl glycidyl ether and allyl acetate, among which allyl glycidyl ether is preferred from the viewpoint of the wet adhesive strength.

Specific examples of the hydrolyzable silyl-containing monomer (B3) include: vinyltrialkoxysilanes such as vinyltrimethoxysilane and vinyltriethoxysilane; vinylalkyldialkoxysilanes such as vinylmethyldimethoxysilane and vinylmethyldiethoxysilane; γ-(meth)acryloxypropyltrialkoxysilanes such as γ-(meth)acryloxypropyltrimethoxysilane and γ-(meth)acryloxypropyltriethoxysilane; γ-(meth)acryloxypropylalkyldialkoxysilanes such as γ-(meth)acryloxypropylmethyldimethoxysilane and γ-(meth)acryloxypropylmethyldiethoxysilane; and vinyltris(β-methoxyethoxy)silane, among which vinyltrialkoxysilanes, particularly vinyltrimethoxysilane, are preferred from the viewpoint of the wet adhesive strength.

Specific examples of the acetoacetyl-containing monomer (B4) include: vinyl acetoacetate, allyl acetoacetate and allyl diacetoacetate; acetoacetoxyalkyl (meth)acrylates such as acetoacetoxyethyl (meth)acrylate and acetoacetoxypropyl (meth)acrylate; and acetoacetoxyalkyl crotonates such as acetoacetoxyethyl crotonate and acetoacetoxypropyl crotonate; and 2-cyanoacetoacetoxyethyl (meth)acrylate, among which acetoacetoxyalkyl (meth)acrylates, particularly acetoacetoxyethyl (meth)acrylate, are preferred from the viewpoint of the reduction of the variations in properties and the improvement of the wet adhesive strength.

Specific examples of the monomer (B5) having at least two vinyl groups in a molecular structure thereof include:

divinyl benzene, diallyl phthalate, triallyl cyanurate and triallyl isocyanurate; alkylene glycol (meth)acrylates such as ethylene glycol di(meth)acrylate, 1,2-propylene glycol di(meth)acrylate, 1,3-propylene glycol di(meth)acrylate, 1,4-butanediol di(meth)acrylate, 1,6-hexanediol di(meth)acrylate and neopentyl glycol di(meth)acrylate; and trimethylolpropane tri(meth)acrylate, and allyl (meth)acrylate.

Specific examples of the hydroxyl-containing monomer (B6) include hydroxyalkyl (meth)acrylates, such as 2-hydroxyethyl (meth)acrylate, hydroxypropyl (meth) acrylate and 4-hydroxybutyl (meth) acrylate, each containing an alkyl group having 1 to 10 carbon atoms, particularly 1 to 6 carbon atoms. Among these, 2-hydroxyethyl methacrylate is preferred because it serves as a protective colloid in the emulsion polymerization and improves compatibility with a cement mortar composition.

In a preferred embodiment of the present invention, the functional group-containing monomer (B) is preferably selected from the group consisting of the glycidyl-containing monomer (B1), the hydrolyzable silyl-containing monomer (B3) and the acetoacetyl-containing monomer (B4). The functional group-containing monomer (B) particularly preferably contains at least one of the glycidyl-containing monomer (B1) and the acetoacetyl-containing monomer (B4). This is because, where the resulting aqueous synthetic resin emulsion is used for a cement mortar admixture, the cement mortar admixture is highly effective for the reduction of the variations in properties and the improvement of the adhesive strength.

The amount of the functional group-containing monomer (B) to be used is preferably 0.01 to 10 wt%, more preferably 0.05 to 5 wt%, particularly preferably 0.1 to 5 wt%, further preferably 0.1 to 1 wt%, based on the total weight of the comonomers. If the use amount of the functional group-containing monomer (B) is too small, the effects of reducing the variations in properties and improving the adhesive strength tend to be insufficient. If the use amount of the functional group-containing monomer (B) is too great, insufficient polymerization will result.

These functional group-containing monomers (B) may be used either alone or in combination.

In the present invention, any other types of copolymerizable monomers may be used, as long as the object of the present invention is not impaired. Examples of the copolymerizable monomers include vinyl monomers including vinyl carboxylates such as vinyl acetate, vinyl propionate, vinyl laurate and vinyl versatate, and alkyl vinyl ethers such as methyl vinyl ether; olefin monomers including olefins such as ethylene, propylene, 1-butene and isobutene, halogenated olefins such as vinyl chloride, vinylidene chloride, vinyl fluoride and vinylidene fluoride, and ethylene sulfonic acid; and diene monomers such as butadiene-1,3, 2-methylbutadiene, 1,3- or 2,3-dimethylbutadiene-1,3 and 2-chlorobutadiene-1,3.

Other examples of the functional group-containing monomer include nitrile monomers such as (meth) acrylonitrile; acrylic monomers modified with an amide such as (meth) acrylamide, N,N-dimethylacrylamide, t-butylacrylamide, 2-acrylamido-2-methylpropane sulfonic acid or diacetone acrylamide, and acrylic monomers modified with a carboxyl group such as (meth) acrylic acid; and unsaturated dicarboxylic acids such as itaconic acid (anhydride) and maleic acid (anhydride) and esters thereof.

For the inventive aqueous synthetic resin emulsion, ingredients other than the comonomers including the at least one monomer (A) selected from the acrylic monomer and the styrene monomer, and the specific functional group-containing monomer (B) may be used as required. Such ingredients may be properly selected according to a use purpose, as long as the ingredients do not impair the properties of the aqueous synthetic resin emulsion. Examples of the ingredients include a polymerization initiator, a polymerization controller, an auxiliary emulsifier, a plasticizer and a film formation aiding agent.

Any polymerization initiators for ordinary emulsion polymerization may be used. Examples of the polymerization initiator include inorganic persulfate such as potassium persulfate, sodium persulfate and ammonium persulfate; peroxides including organic peroxides, azo initiators, hydrogen peroxide and butyl peroxide; and redox polymerization initiators which each contain any of these compounds in combination with a reducing agent such as acidic sodium sulfite or L-ascorbic acid. These may be used either alone or in combination. Among these, ammonium persulfate and potassium persulfate are preferred which facilitate the polymerization without adversely influencing film properties and strength enhancement.

The polymerization controller is properly selected from known polymerization controllers. Examples of the polymerization controller include a chain transfer agent and a buffer agent.

Examples of the chain transfer agent include alcohols such as methanol, ethanol, propanol and butanol; aldehydes such as acetaldehyde, propionaldehyde, n-butyraldehyde, furfural and benzaldehyde; and mercaptans such as dodecyl mercaptan, lauryl mercaptan, normal mercaptan, thioglycolic acid, octyl thioglycolate and thioglycerol, which may be used either alone or in combination. The use of the chain transfer agent is effective for stable polymerization, but lowers the polymerization degree of the synthetic resin. This leads to reduction in film water resistance. Where the emulsion is used as the cement mortar admixture, the resulting cement mortar tends to have greater variations in properties and a reduced adhesive strength. Where the chain transfer agent is used, it is desirable to minimize the use amount of the chain transfer agent.

Examples of the buffer agent include sodium acetate, ammonium acetate, dibasic sodium phosphate and

sodium citrate, which may be used either alone or in combination.

Any auxiliary emulsifiers known to those skilled in the art for use in the emulsion polymerization may be used. Therefore, the auxiliary emulsifier may be properly selected from the known auxiliary emulsifiers, e.g., anionic, cationic and nonionic surfactants, water-soluble polymers other than the PVA resin [I] which each function as a protective colloid, and water-soluble oligomers.

Preferred specific examples of the surfactant include anionic surfactants such as sodium lauryl sulfate and sodium dodecylbenzenesulfonate, and nonionic surfactants such as having a Pluronic-type structure or having a polyoxyethylene-type structure. Also usable as the surfactant is a reactive surfactant having a radically polymerizable unsaturated bond in a structure thereof. These may be used either alone or in combination.

The use of the surfactant permits smooth emulsion polymerization and easy control of the emulsion polymerization (i.e., the surfactant functions as an emulsifier) and, in addition, is effective in suppressing generation of coarse particles and agglomerates during the polymerization.

However, if a greater amount of the surfactant is used as the emulsifier, the graft ratio tends to be reduced. Therefore, the surfactant should be used in a supplemental amount relative to the PVA resin, i.e., the amount of the surfactant should be minimized.

Examples of the water-soluble polymers other than the PVA resin [I] functioning as the protective colloid include PVA resins other than the PVA resin [I], hydroxyethyl cellulose, polyvinylpyrrolidone and methyl cellulose, which may be use either alone or in combination. These are effective in increasing the viscosity of the emulsion or changing the viscosity by changing particle diameters of the emulsion. However, there is a possibility that the water-soluble polymer reduces the film water resistance depending on the use amount. Where the water-soluble polymer is used, therefore, it is desirable to minimize the amount of the water-soluble polymer.

Preferred examples of the water-soluble oligomers include polymers or copolymers which each have a polymerization degree of about 10 to about 500 and have a hydrophilic group such as a sulfonic group, a carboxyl group, a hydroxyl group or an alkylene glycol group. Specific examples of the water-soluble oligomers include amide copolymers such as 2-methacrylamido-2-methylpropane sulfonic acid copolymers; methacrylic acid/sodium-4-styrenesulfonate copolymers; styrene/maleic acid copolymers; melamine sulfonic acid/formaldehyde condensates and poly(meth)acrylates. Specific examples of the water-soluble oligomers include water-soluble oligomers prepared by homopolymerizing or copolymerizing a monomer having a sulfonic group, carboxyl group, hydroxyl group, alkylene glycol group or the like or a radically polymerizable reactive emulsifier. These may be used either alone or in combination. Among these, the 2-methacrylamido-2-methylpropane sulfonic acid copolymers and the methacrylic acid/sodium-4-styrenesulfonate copolymers are preferred from the viewpoint of the stability in mixing with a pigment and a filler such as calcium carbonate in the present invention. The water-soluble oligomer to be used may be prepared through polymerization before the emulsion polymerization is started, or may be a commercially available product.

Usable examples of the plasticizer include adipate plasticizers, phthalic plasticizers and phosphoric plasticizers. Further, a film formation aiding agent having a boiling point of 260˚C or higher is also usable.

The amounts of the above-mentioned other ingredients to be used are properly selected according to the use purpose, as long as these ingredients do not impair the object of the invention.

Next, it will be described how to produce the inventive aqueous synthetic resin emulsion.

As described above, the inventive aqueous synthetic resin emulsion is produced by employing the specific PVA resin [I] as the protective colloid agent and polymerizing the comonomers including the at least one monomer (A) selected from the acrylic monomer and the styrene monomer and the specific functional group-containing monomer (B) through the emulsion polymerization.

Exemplary methods for the emulsion polymerization include a monomer dropwise-adding emulsion polymerization method in which water and the PVA resin [I] are put in a reaction vessel and then the comonomers and the polymerization initiator are added dropwise to the reaction vessel at an increased temperature, and a pre-emulsified monomer dropwise-adding emulsion polymerization method in which the monomers are preliminarily dispersed and emulsified in water in the presence of the PVA resin [I] and then the resulting emulsion is added dropwise. Of these methods, the monomer dropwise-adding method is more convenient for the control of the polymerization process.

For the emulsion polymerization, the other ingredients such as the polymerization initiator, the polymerization controller and the auxiliary emulsifier may be used in addition to the PVA resin [I] and the comonomers as required. Conditions for the polymerization reaction may be properly selected according to the types of the comonomers and a use purpose.

The emulsion polymerization process will hereinafter be described more specifically.

First, water and the PVA resin [I] are put in a reaction vessel optionally together with the auxiliary emulsifier, and the reaction vessel is heated (typically up to 65˚C to 90˚C). Then, parts of the comonomers and the polymerization initiator are added into the reaction vessel to cause initial-stage polymerization to proceed. Subsequently, the remaining parts of the comonomers are added either all at once or dropwise into the reaction vessel optionally together with the polymerization initiator to cause the polymerization to proceed. When the polymerization reaction is supposedly completed, the reaction vessel is cooled, and the intended aqueous synthetic resin emulsion is taken out.

In the present invention, the aqueous synthetic resin emulsion obtained through the emulsion polymerization is typically a homogenous milk-white emulsion, and the synthetic resin in the aqueous synthetic resin emulsion preferably has an average particle diameter of 0.2 to 2 μm, more preferably 0.3 to 1.5 μm.

The average particle diameter can be determined by a conventional method, for example, by means of a laser analysis /scattering particle size distribution analyzer LA-910 (available from Horiba, Ltd.)

For use for the cement mortar admixture, the synthetic resin in the aqueous synthetic resin emulsion preferably has a glass transition temperature of -20˚C to +30˚C, particularly preferably -15˚C to +20˚C, for the reduction of the variations in properties and the improvement of the adhesive strength. If the glass transition temperature is too low, the adhesive strength tends to be reduced. If the glass transition temperature is too high, it is necessary to lower the film-forming temperature of the aqueous synthetic resin emulsion by blending a great amount of a plasticizer such as dibutyl phthalate. This results in reduction in wet adhesive strength.

In the present invention, the glass transition temperature of the synthetic resin is a glass transition temperature value calculated from the Fox equation based on a major monomer component of the comonomers excluding the functional group-containing monomer (B) .

In the present invention, at least part of the PVA resin [I] is preferably grafted to the synthetic resin, because the resulting aqueous synthetic resin emulsion has little variations in measurement values of storage stability and adhesive strength before drying thereof.

Where the PVA resin [I] is grafted to the synthetic resin, a value (W) calculated from the following expression (2) is preferably not less than 50 wt%, more preferably not less than 65 wt%, further preferably not less than 70 wt%. This value is an index of the graft ratio. If this value is too low, the protective colloid function is deteriorated with a lower graft ratio. This reduces the polymerization stability and the compatibility with the filler and the like.

The value (W) of the expression (2) is determined in the following manner.

The emulsion of interest is dried at 40˚C for 16 hours to produce a 0.5-mm thick film, which is in turn stored at 23˚C at 65%RH for 2 days. The film is immersed in boiling water for 8 hours and then in acetone for 8 hours for extraction of a non-grafted resin component. Assuming that an absolute dry weight of the film before the extraction is represented by $w_1$ (g) and an absolute dry weight of the film after the extraction is represented by $w_2$ (g), W is calculated from the following expression:

$$W\ (wt\%) = (w_2)/(w_1) \times 100 \ .....(2)$$

wherein $w_1$ is the absolute dry weight of the film before the extraction, and $w_2$ is the absolute dry weight of the film after the extraction.

The absolute dry weight ($w_1$) of the film before the extraction is an absolute dry weight determined by drying a film sample different from an extraction test sample at 105˚C for 1 hour before the extraction, and the absolute dry weight ($w_2$) of the film after the extraction is the weight of a sample subjected to the extraction test and dried at 105˚C for 1 hour. Since the determination of the weights $w_1$ and $w_2$ is based on different samples, the absolute dry weight of the film samples are calculated through correction based on volatile contents resulting from the drying of the samples.

An exemplary method for adjusting the value (W) of the expression (2) within the aforementioned range is to set the emulsion polymerization temperature at a slightly higher level than conventional emulsion polymerization temperatures, or to employ a persulfate as a polymerization catalyst in combination with a very small amount of a reducing agent (e.g., acidic sodium sulfite).

In the present invention, various types of additives may be further added, as required, to the aqueous synthetic resin emulsion obtained through the emulsion polymerization. Examples of the additives include an organic pigment, an inorganic pigment, a water-soluble additive, a pH controller, a preservative and an antioxidant.

Thus, the inventive aqueous synthetic resin emulsion for the cement mortar admixture is provided. The aqueous synthetic resin emulsion preferably has a nonvolatile content adjusted at 40 to 60 wt% for use.

In the present invention, a re-emulsifiable aqueous synthetic resin emulsion powder for a cement mortar admixture is produced by drying the aqueous synthetic resin emulsion thus produced through the emulsion polymerization.

The resulting aqueous synthetic resin emulsion powder for the cement mortar admixture may be used in a powdery form, or may be re-emulsified in water for use as an aqueous synthetic resin emulsion.

Exemplary methods for the drying include spray-drying, freeze-drying and hot air drying after coagulation. Among these methods, the spray-drying is preferred from the viewpoint of production costs and energy saving.

Exemplary spraying methods for the spray-drying include a disk type spraying method and a nozzle type spraying method. Exemplary heat sources for the spray-drying include hot air and heated steam. Conditions for the spray drying are properly selected according to the size and type of a spray dryer, and the nonvolatile content, the

viscosity and the flow rate of the aqueous emulsion. A spray drying temperature is typically 80˚C to 150˚C, preferably 100˚C to 140˚C. If the drying temperature is too low, time required for the drying is prolonged, leading to a productivity problem. If the drying temperature is too high, the resin per se tends to be degraded due to the heat.

In the spray drying, more specifically, the nonvolatile content of the aqueous synthetic resin emulsion is first adjusted, and the emulsion is continuously supplied and sprayed from a nozzle of the spray dryer. Then, the sprayed emulsion is dried with warm air to be thereby disintegrated into a powdery form. In some cases, the emulsion to be sprayed with its nonvolatile content adjusted may be preheated, and continuously supplied and sprayed from the nozzle. Then, the sprayed emulsion is dried with warm air to be thereby disintegrated into a powdery form. The preheating increases the drying speed, and increases the nonvolatile content of the sprayed emulsion due to reduction in the viscosity of the sprayed emulsion, thereby reducing the production costs.

In the present invention, an anti-caking agent may be mixed with the aqueous synthetic resin emulsion or with the resin emulsion powder resulting from the spray drying, or sprayed from another nozzle during the spray-drying.

The addition of the anti-caking agent prevents adhesion, agglomeration and blocking of the resin particles during storage with the resin particles being coated with the anti-caking agent.

A known inert inorganic or organic powder may be used as the anti-caking agent. Examples of the inorganic powder include calcium carbonate, talc, clay, dolomite, silicic anhydride and alumina white, which may be used either alone or in combination. Among these, silicic anhydride, calcium carbonate and clay are preferred. A resin emulsion powder resulting from spray drying of an aqueous emulsion of a synthetic resin having a glass transition temperature of not lower than 70˚C is also usable as the organic powder. The amount of the anti-caking agent to be used is preferably about 5 to about 30 wt% based on the resin emulsion powder.

In order to improve the re-emulsifiability of the re-emulsifiable aqueous synthetic resin emulsion powder in water, a water-soluble additive may be blended in the re-emulsifiable aqueous synthetic resin emulsion powder. The water-soluble additive is typically blended in the aqueous synthetic resin emulsion before the drying. The amount of the water-soluble additive to be blended is 2 to 50 parts based on 100 parts of the nonvolatile content of the aqueous synthetic resin emulsion. If the amount is too small, the re-emulsifiability of the emulsion powder in water cannot be sufficiently improved. If the amount is too great, the re-emulsifiability of the emulsion powder in water can be significantly improved, but the film water resistance is reduced, making it impossible to impart the emulsion powder with the intended properties.

Examples of the water-soluble additive include PVA resins, hydroxyethyl celluloses, methyl celluloses, polyvinylpyrrolidone, starches, dextrins, water-soluble resins including water-soluble alkyd resins, water-soluble amino resins, water-soluble acrylic resins, water-soluble polycarboxylic resins and water-soluble polyamide resins, which may be used either alone or in combination. Among these, the PVA resins are preferred.

Among the PVA resins, a polyvinyl alcohol having an average saponification degree of not less than 85 mol% is preferred, and a polyvinyl alcohol having an average saponification degree of not less than 87 mol% is more preferred. The upper limit of the average saponification degree is not particularly limited, but is preferably not greater than 99.5 mol%, more preferably not greater than 95 mol%. If the average saponification degree is too small, the film water resistance tends to be significantly reduced. If the average saponification degree is too great, the water resistance is improved, but the re-emulsifiability in water tends to be deteriorated.

The PVA resin preferably has an average polymerization degree of 50 to 3000, more preferably 200 to 2000, further preferably 300 to 600. If the average polymerization degree is too small, the water resistance tends to be reduced. If the average polymerization degree is too great, the re-emulsifiability tends to be deteriorated.

A PVA resin less soluble in water is likely to adversely affect the re-emulsifiability. Therefore, it is desirable to preliminarily check the solubility of the PVA resin in water.

In the present invention, an aqueous synthetic resin emulsion containing a water-soluble cationic polymer (hereinafter sometimes referred to as "cationic polymer-containing aqueous emulsion") or an aqueous synthetic resin emulsion powder containing a water-soluble cationic polymer (hereinafter sometimes referred to as "cationic polymer-containing aqueous emulsion powder") is produced by blending a specific water-soluble cationic polymer in the aqueous synthetic resin emulsion or the aqueous synthetic resin emulsion powder produced in the aforementioned manner.

Specific methods for producing the cationic polymer containing aqueous emulsion or the cationic polymer-containing aqueous emulsion powder include:

(a) a method of mixing the aqueous synthetic resin emulsion with a water-soluble liquid cationic polymer,
(b) a method of drying the cationic polymer-containing aqueous emulsion obtained by the method (a) to provide the cationic polymer-containing aqueous emulsion powder, and (c) a method of mixing a powdery aqueous cationic polymer with the aqueous synthetic resin emulsion powder obtained by drying the aqueous synthetic resin emulsion.

The water-soluble cationic polymer to be used in the present invention may be in a liquid form or in a powdery form. For the aqueous synthetic resin emulsion, a water-soluble liquid cationic polymer or an aqueous solution of a

water-soluble powdery cationic polymer is preferably used. For the aqueous synthetic resin emulsion powder, a water-soluble powdery cationic polymer is preferably used. However, the form of the water-soluble cationic polymer is not limited to the aforementioned forms.

The water-soluble cationic polymer to be blended with the aqueous synthetic resin emulsion has a molecular weight of 3, 000 to 500, 000, preferably 5, 000 to 300,000, particularly preferably 8,000 to 200,000. If the molecular weight is too great, the stability of the aqueous synthetic resin emulsion tends to be reduced, resulting in generation of agglomerates or an increased viscosity. If the molecular weight is too small, the cement mortar strength and the adhesive strength tend to be lower than expected with insufficient adsorption to the emulsion particles.

The water-soluble cationic polymer to be blended with the aqueous synthetic resin emulsion powder has a molecular weight of 3,000 to 2,000,000, preferably 50,000 to 1,500,000, particularly preferably 100,000 to 1,200,000. If the molecular weight is too great, a cement mortar containing the resulting aqueous synthetic resin emulsion powder as the cement mortar admixture is liable to have poorer stability and a viscosity increased over time, resulting in poorer trowelling characteristics. If the molecular weight is too small, it will be impossible to provide a desired cement mortar strength and a desired adhesive strength.

In the present invention, the water-soluble cationic polymer having a molecular weight in the specific range can be stably mixed with the aqueous synthetic resin emulsion or the aqueous synthetic resin emulsion powder, thereby improving the adhesive strength.

The water-soluble cationic polymer to be used in the present invention is a polymer having a cationic group therein. The water-soluble cationic polymer preferably contains at least one of tertiary cation-containing groups and quaternary cation-containing groups, because such a water-soluble cationic polymer is easily available and highly safe to the environment and human bodies and its cation strength is not excessively high.

Examples of the tertiary cation-containing group include diallylmonoalkylammonium halides such as diallylmonomethylammonium chloride. Examples of the quaternary cation-containing group include diallyldialkylammonium halides such as diallyldimethylammonium chloride. The water-soluble cationic polymer preferably contains these cation-containing groups either alone or in combination. Among these, a polymer containing a diallyldimethylammonium chloride unit is preferred.

Other preferred examples of the water-soluble cationic polymer to be used include a copolymer of acrylamide and a diallyl compound having at least one of the tertiary cation-containing groups and the quaternary cation-containing groups, and a copolymer of such a diallyl compound and an unsaturated dicarboxylic acid such as maleic acid.

More specifically, examples of the water-soluble cationic polymer include a polymer having a repeating unit represented by the following general formula (3) :

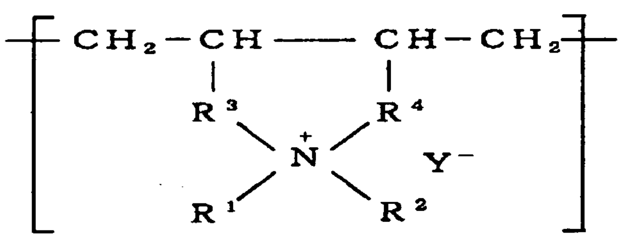

··· (3)

wherein $R^1$ and $R^2$, which may be the same or different, are each a hydrogen atom or an alkyl group having 1 to 3 carbon atoms; $R^3$ and $R^4$, which may be the same or different, are each an alkylene group having 1 to 3 carbon atoms; and $Y^-$ is a monovalent anion, and preferably having a repetition number (polymerization degree) of 10 to 4000, and a polymer having a repeating unit represented by the following general formula (4) :

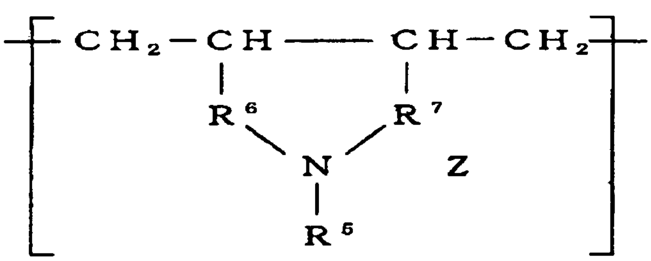

··· (4)

wherein $R^5$ is not particularly limited but preferably an alkyl group having 1 to 3 carbon atoms; $R^6$ and $R^7$, which may be the same or different, are each an alkylene group having 1 or 2 carbon atoms; and Z is an acid, and preferably having

a repetition number of 10 to 4000.

In the general formulae (3) and (4), examples of the alkyl group having 1 to 3 carbon atoms include methyl, ethyl, n-propyl and isopropyl. Examples of the alkylene group having 1 to 3 carbon atoms include methylene, ethylene and propylene.

In the general formula (3), examples of the monovalent anion ($Y^-$) include $Cl^-$ and $Br^-$, and $Cl^-$ is particularly preferred.

In the general formula (4), examples of the acid (Z) which forms a salt with an amine include inorganic acids such as hydrochloric acid and nitric acid, and organic acids such as formic acid, acetic acid, propionic acid, maleic acid and fumaric acid. Among these, the inorganic acids are preferred because of their availability, and hydrochloric acid is particularly preferred.

More specifically, a polymer having at least one of repeating units represented by the following general formulae (5) and (6) is preferred.

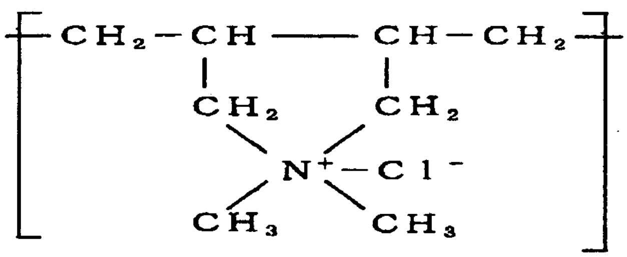

··· (5)

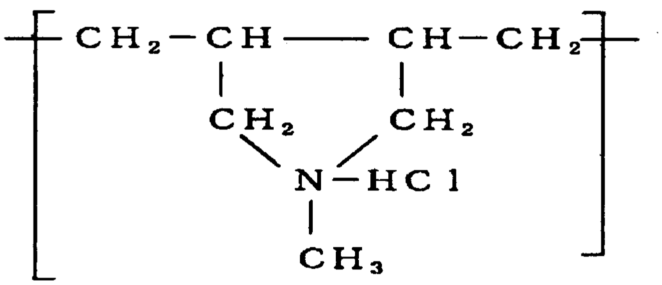

··· (6)

Further, a polymer having repeating units represented by the following general formulae (7) and (8), and a polymer having repeating units represented by the following general formulae (9) and (10) are particularly preferred.

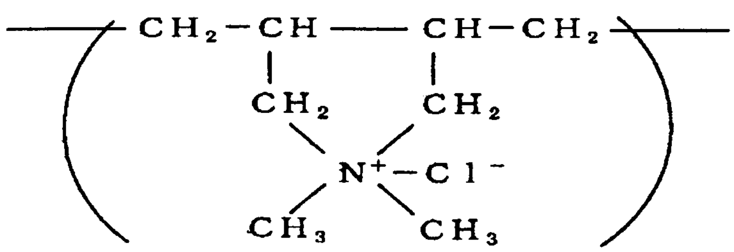

··· (7)

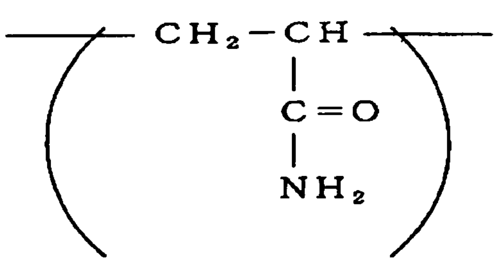

··· (8)

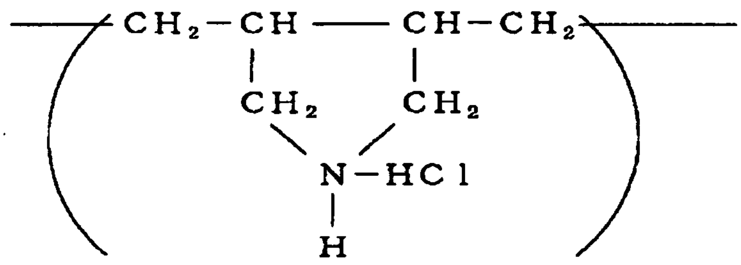

... (9)

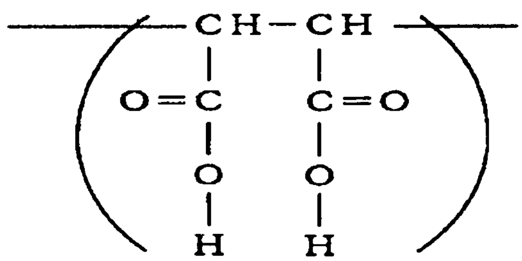

... (10)

A preferred repetition number for the repeating units of the general formulae (7), (9) and (10) is 10 to 4000, and a preferred repetition number for the repeating unit of the general formula (8) is 1 to 500

Among the aforementioned polymers, a polymer containing the diallyldimethylammonium chloride unit is more preferred, and a copolymer of diallyldimethylammonium chloride and acrylamide is further preferred.

The water-soluble cationic polymer is preferably blended in a proportion of 0.1 to 50 parts, more preferably 0.1 to 10 parts, based on 100 parts of the aqueous synthetic resin emulsion (nonvolatile content) or the aqueous synthetic resin emulsion powder. If the proportion is too small, it will be impossible to provide an intended effect. If the proportion is too great, the cationic polymer-containing aqueous emulsion and an aqueous synthetic resin emulsion prepared by re-emulsifying the cationic polymer-containing aqueous emulsion powder tend to suffer from agglomeration or increase in viscosity over time.

The cationic polymer-containing aqueous emulsion and the cationic polymer-containing aqueous emulsion powder thus provided preferably each have a zeta potential of 0.1 to 100 mV, more preferably 1 to 100 mV, further preferably 3 to 100 mV. In the present invention, particularly, the zeta potential serves as an index of adhesiveness to an old mortar surface or to a polymer coated surface. If the zeta potential is too high, the dispersion stability of resin particles tends to be reduced. If the zeta potential value is too low, the cement mortar tends to have lower fluidity and poorer adhesiveness to an old mortar surface and a resin coated surface.

In the present invention, the zeta potential is measured by means of ZEECOM IP-120B SYSTEM available from Microtech Nichimen Co., Ltd. The cationic polymer-containing aqueous emulsion powder is re-emulsified in water before the measurement.

Thus, the cationic polymer-containing aqueous emulsion or the cationic polymer-containing aqueous emulsion powder according to the present invention is produced. For the production of the cationic polymer-containing emulsion powder, the cationic polymer-containing emulsion which contains the aqueous synthetic resin emulsion and the water-soluble cationic polymer is powdered into the cationic polymer-containing emulsion powder through the aforementioned powdering process.

Where the aqueous synthetic resin emulsion for the cement mortal admixture or the re-emulsifiable aqueous synthetic resin emulsion powder for the cement mortar admixture according to the present invention is used as the cement mortar admixture, the cement mortar admixture is highly effective, i.e., ensures that the resulting cement mortar is excellent in fluidity and workability, and has little variations in properties and an improved adhesive strength. The aqueous synthetic resin emulsion and the re-emulsifiable aqueous synthetic resin emulsion powder are useful as modifiers for cement mortars, repairing mortars, base conditioning materials, self-leveling materials, tile bonding mortars, mortar sealers and primers, mortar curing agents and plaster materials. Further, the aqueous synthetic resin emulsion and the re-emulsifiable aqueous synthetic resin emulsion powder are useful for civil engineering and architectural materials, and for glass fiber bonding agents and fire retarders.

EXAMPLES

The present invention will hereinafter be described more specifically by way of examples. However, it should be understood that the invention be not limited to the examples unless the examples depart from the scope of the invention.

In the following examples, "parts" and "%" are based on weight unless otherwise specified.
First, examples of the aqueous synthetic resin emulsion and the aqueous synthetic resin emulsion powder (containing no water-soluble cationic polymer) will be described.

Production of Aqueous Synthetic Resin Emulsions

Example 1-1/Emulsion 1

In a 2-liter stainless steel reaction vessel provided with a stirrer and a reflux condenser, 670 parts of water, 46 parts of a protective colloid of a PVA having 1,2-diol bonds on its side chains (having an average polymerization degree of 300, an average saponification degree of about 99.1 mol% and a side chain 1, 2-diol bond content of 8 mol%, and available from the Nippon Synthetic Chemical Industry Co., Ltd.), 2 g of sodium acetate and 1g of acidic sodium sulfite were charged. Then, the reaction vessel was heated to 85˚C to dissolve the PVA in water. In turn, with the temperature of the reaction vessel kept at 80˚C, 66 parts of a monomer mixture preliminarily prepared (358 parts of butyl acrylate/ 293 parts of methyl methacrylate/6.5 parts of acetoacetoxyethyl methacrylate = 54.4/44.6/1 (weight ratio)) was added to the reaction vessel. Further, 30% of an ammonium persulfate aqueous solution prepared by dissolving 1.6 g of ammonium persulfate in 30 g of water was added as a polymerization initiator to the reaction vessel to cause initial-stage polymerization to proceed for 1 hour. Subsequently, the rest of the monomer mixture and 60% of the ammonium persulfate aqueous solution as the polymerization initiator were added dropwise to the reaction vessel in 4 hours to cause the polymerization to proceed. After completion of the dropwise addition, 10% of the above-mentioned ammonium persulfate aqueous solution was added to the reaction mixture, and the resulting mixture was aged at the same temperature for 1 hour. Thus, an aqueous synthetic resin emulsion (Emulsion 1) having a nonvolatile content of 50.1 % and an average particle diameter of 0.43 μm was produced.
The aqueous synthetic resin emulsion thus produced had a value W of 80 wt% which was calculated from the aforementioned equation (2).
A synthetic resin having a major monomer formulation of butyl acrylate/methyl methacrylate = 358/293 = 55/45 (weight ratio) had a glass transition temperature (Tg) of about -1˚C which was calculated assuming that homopolymers of the respective major monomers have glass transition temperatures Tg of -52˚C and +105˚C.

Example 1-2/Emulsion 2

Emulsion 2 having a nonvolatile content of 49.8 % and an average particle diameter of 0.40 μm was produced in substantially the same manner as Emulsion 1, except that the type and the formulation ratio of the monomer mixture was changed to butyl acrylate/styrene/acetoacetoxyethyl methacrylate = 54.4/44.6/1 (weight ratio).
The aqueous synthetic resin emulsion thus produced had a value W of 75 wt% which was calculated from the aforementioned equation (2).
A synthetic resin having a major monomer formulation of butyl acrylate/styrene = 55/45 (weight ratio) had a glass transition temperature (Tg) of about -2˚C which was calculated assuming that homopolymers of the respective major monomers had glass transition temperatures Tg of -52˚C and +100˚C.

Example 1-3/Emulsion 3

Emulsion 3 having a nonvolatile content of 50.2 % and an average particle diameter of 0.42 μm was produced in substantially the same manner as Emulsion 1, except that the type and the formulation ratio of the monomer mixture was changed to butyl acrylate/styrene/glycidyl methacrylate = 44.6/54.4/1 (weight ratio).
The aqueous synthetic resin emulsion thus produced had a value W of 77 wt% which was calculated from the aforementioned equation (2).
A synthetic resin having a major monomer formulation of butyl acrylate/styrene = 45/55 (weight ratio) had a glass transition temperature (Tg) of about +12˚C which was calculated assuming that homopolymers of the respective major monomers had glass transition temperatures Tg of -52˚C and +100˚C.
It is noted that dibutyl phthalate was added as a plasticizer in a proportion of 3 % to the resin component for adjustment of the lowest film forming temperature.

Example 1-4/Emulsion 4

Emulsion 4 having a nonvolatile content of 50.2 % and an average particle diameter of 0.45 μm was produced in substantially the same manner as Emulsion 1, except that the type and the formulation ratio of the monomer mixture was changed to butyl acrylate/methyl methacrylate/styrene/acetoacetoxyethyl methacrylate = 55.5/22/22/0.5 (weight

ratio).

The aqueous synthetic resin emulsion thus produced had a value W of 75 wt% which was calculated from the aforementioned equation (2).

A synthetic resin having a major monomer formulation of butyl acrylate/methyl methacrylate/styrene = 55.8/22.1/22.1 (weight ratio) had a glass transition temperature (Tg) of about -3˚C which was calculated assuming that homopolymers of the respective major monomers had glass transition temperatures Tg of -52˚C, +105 ˚C and +100˚C.

Example 1-5/Emulsion 5

Emulsion 5 having a nonvolatile content of 49.9 % and an average particle diameter of 0.44 μm was produced in substantially the same manner as Emulsion 1, except that the type and the formulation ratio of the monomer mixture was changed to methyl methacrylate/2-ethylhexyl acrylate/glycidyl methacrylate = 48/51/1 (weight ratio).

The aqueous synthetic resin emulsion thus produced had a value W of 73 wt% which was calculated from the aforementioned equation (2).

A synthetic resin having a major monomer formulation of methyl methacrylate/2-ethylhexyl acrylate = 48.5/51.5 (weight ratio) had a glass transition temperature (Tg) of about -10˚C which was calculated assuming that homopolymers of the respective major monomers had glass transition temperatures Tg of +105˚C and -70˚C.

Example 1-6/Emulsion 6

Emulsion 6 having a nonvolatile content of 50.1 % and an average particle diameter of 0.42 μm was produced in substantially the same manner as Emulsion 1, except that the type and the formulation ratio of the monomer mixture was changed to butyl acrylate/methyl methacrylate/vinyltrimethoxysilane = 54.4/44.6/1 (weight ratio).

The aqueous synthetic resin emulsion thus produced had a value W of 74 wt% which was calculated from the aforementioned equation (2).

A synthetic resin having a major monomer formulation of butyl acrylate/methyl methacrylate = 55/45 (weight ratio) had a calculated glass transition temperature (Tg) of about -1˚C as in the case of Emulsion 1.

Example 1-7/Emulsion 7

Emulsion 7 having a nonvolatile content of 50.0 % and an average particle diameter of 0.43 μm was produced in substantially the same manner as Emulsion 1, except that the type and the formulation ratio of the monomer mixture was changed to butyl acrylate/methyl methacrylate/ethylene glycol dimethacrylate = 54.4/44.6/1 (weight ratio).

The aqueous synthetic resin emulsion thus produced had a value W of 71 wt% which was calculated from the aforementioned equation (2).

A synthetic resin having a major monomer formulation of butyl acrylate/methyl methacrylate = 55/45 (weight ratio) had a calculated glass transition temperature (Tg) of about -1˚C as in the case of Emulsion 1.

Example 1-8/Emulsion 8

Emulsion 8 having a nonvolatile content of 49.8 % and an average particle diameter of 0.43 μm was produced in substantially the same manner as Emulsion 1, except that the type and the formulation ratio of the monomer mixture was changed to butyl acrylate/methyl methacrylate/allyl glycidyl ether = 54.4/44.6/1 (weight ratio).

The aqueous synthetic resin emulsion thus produced had a value W of 72 wt% which was calculated from the aforementioned equation (2).

A synthetic resin having a major monomer formulation of butyl acrylate/methyl methacrylate = 55/45 (weight ratio) had a calculated glass transition temperature (Tg) of about -1˚C as in the case of Emulsion 1.

Example 1-9/Emulsion 9

Emulsion 9 having a nonvolatile content of 50.3 % and an average particle diameter of 0.40 μm was produced in substantially the same manner as Emulsion 1, except that a PVA having 1,2-diol bonds on its side chains (having an average polymerization degree of 300, an average saponification degree of 99.1 mol% and a side chain 1,2-diol bond content of 3 mol%, and available from the Nippon Synthetic Chemical Industry Co., Ltd.) was used as the protective colloid.

The aqueous synthetic resin emulsion thus produced had a value W of 76 wt% which was calculated from the aforementioned equation (2).

A synthetic resin having a major monomer formulation of butyl acrylate/methyl methacrylate = 55/45 (weight ratio) had a calculated glass transition temperature (Tg) of about -1˚C as in the case of Emulsion 1.

Comparative Example 1-1/Emulsion 10

Emulsion 10 having a nonvolatile content of 50.3 % and an average particle diameter of 0.43 μm was produced in substantially the same manner as Emulsion 1, except that the type and the formulation ratio of the monomer mixture was changed to butyl acrylate/methyl methacrylate = 55/45 (weight ratio) and 665 parts of water was used.
The aqueous synthetic resin emulsion thus produced had a value W of 78 wt% which was calculated from the aforementioned equation (2).
A synthetic resin having a major monomer formulation of butyl acrylate/methyl methacrylate = 55/45 (weight ratio) had a glass transition temperature (Tg) of about -1˚C which was calculated assuming that homopolymers of the respective major monomers had glass transition temperatures Tg of -52˚C and +105˚C.

Comparative Example 1-2/Emulsion 11

Emulsion 11 having a nonvolatile content of 50.0 % and an average particle diameter of 0.44 μm was produced in substantially the same manner as Emulsion 1, except that an acetoacetyl-modified PVA (having an average polymerization degree of 300, an average saponification degree of 97.0 mol% and an acetoacetyl modification degree of 0.5 mol%, and available from the Nippon Synthetic Chemical Industry Co., Ltd.) was used as the protective colloid.
The aqueous synthetic resin emulsion thus produced had a value W of 78 wt% which was calculated from the aforementioned equation (2).
A synthetic resin having a major monomer formulation of butyl acrylate/methyl methacrylate = 55/45 (weight ratio) had a glass transition temperature (Tg) of about -1˚C which was calculated assuming that homopolymers of the respective major monomers had glass transition temperatures Tg of -52˚C and +105˚C.

Comparative Example 1-3

Polymerization was cause to proceed in substantially the same manner as in the case of Emulsion 1, except that 37 parts of a PVA having an average polymerization degree of 500 and an average saponification degree of 88 mol% (GOSENOL GL05 available from the Nippon Synthetic Chemical Industry Co., Ltd.) and 9 parts of a PVA having an average polymerization degree of 1400 and an average saponification degree of 88 mol% (GOSENOL GM14 available from the Nippon Synthetic Chemical Industry Co., Ltd.) were used as the protective colloid. However, gelation occurred during the polymerization, making it impossible to provide an aqueous synthetic resin emulsion.

Comparative Example 1-4/Emulsion 12

Emulsion 12 having a nonvolatile content of 50.2 % and an average particle diameter of 0.07 μm was produced in substantially the same manner as Emulsion 1, except that 28 parts of a nonionic activator (EMULGEN 1135S-70 available from Kao Corporation) and 26 parts of an anionic activator (HOSTAPAR BVconc available from Clariant Japan K.K.) were used as emulsifiers instead of the protective colloid, more specifically, 20% of these activators and 200 parts of water were charged in the reaction vessel, and then emulsifiable monomers were prepared by using the rest of the activators, about 435 parts of water and the monomer mixture for polymerization.
The aqueous synthetic resin emulsion thus produced had a value W of 43 wt% which was calculated from the aforementioned equation (2).
A synthetic resin having a major monomer formulation of butyl acrylate/methyl methacrylate = 55/45 (weight ratio) had a glass transition temperature (Tg) of about -1˚C which was calculated assuming that homopolymers of the respective major monomers had glass transition temperatures Tg of -52˚C and +105˚C.

Production of Re-emulsifiable Aqueous Synthetic Resin Emulsion Powder

Example 1-10/Resin Powder 1

After 7 parts of a PVA having an average polymerization degree of 500 and an average saponification degree of 88 mol% (GOSENOL GL05 available from the Nippon Synthetic Chemical Industry Co., Ltd.) was added to 100 parts of the nonvolatile content of Emulsion 1 produced in Example 1-1, the nonvolatile content was adjusted to 40 % by adding water to the resulting mixture. In the presence of calcium carbonate serving as an anti-caking agent, the mixture was spray-dried in warm air at 140˚C by means of a nozzle type spray drier employing hot air as a heat source. Thus, a re-emulsifiable aqueous synthetic resin emulsion powder 1 (Resin Powder 1) was produced.

Examples 1-11 to 1-18/Resin Powders 2 to 9

Re-emulsifiable aqueous synthetic resin emulsion powders 2 to 9 were produced from Emulsions 2 to 9 respectively produced in Examples 1-2 to 1-9 in the same manner as Resin Powder 1.

Comparative Examples 1-5 to 1-7/Resin Powders 10 to 12

Re-emulsifiable aqueous synthetic resin emulsion powders 10 to 12 were produced from Emulsions 10 to 12 respectively produced in Comparative Examples 1-1, 1-2 and 1-4 in the same manner as Resin Powder 1.
Examples 1-1 to 1-18 and Comparative Examples 1-1 to 1-7 were evaluated in the following manner.

Emulsion Polymerization Stability

The polymerization vessel was observed for scaling thereon and presence of coarse particles, and evaluation was made based on the following criteria:

Criteria

O: Slight scaling and virtually no coarse particle.
Δ: Some scaling and some coarse particles.
×: Considerable scaling and many coarse particles.

Re-emulsifiability of Resin Powder

First, 50 g of each of the re-emulsifiable aqueous synthetic resin emulsion powders was added to 50 g of deionized water with stirring, and then the resulting mixture was further stirred for 10 minutes at 1000 revolutions for re-emulsification. The re-emulsified liquid was put in a glass container having a volume of 250 cc, and stored at a room temperature for 1 week. At this time, the re-emulsifiability was evaluated based on the following criteria.

Criteria

◎: A homogeneously re-emulsified liquid with little sedimentation of resin powder.
○: A homogeneously re-emulsified liquid with slight sedimentation of resin powder.
Δ: A re-emulsified liquid with slight phase separation and sedimentation of resin powder.
×: A re-emulsified liquid with phase separation and considerable sedimentation of resin powder.

Fluidity of Cement Mortar

A mortar admixing test was performed in conformity with JIS A6203.
A cement mortar was prepared by mixing 500 g of an ordinary Portland cement, 1500 g of Toyoura standard sand, 111g of each of the emulsions having a nonvolatile content of 45 % (50 g) and 289 g of water for mixing (hereinafter referred to as "mixing water") with stirring for 3 minutes by means of a Hobart mixer. The fluidity of the cement mortar was determined by filling the cement mortar in a flow cone having a bottom diameter of 100 mm and set on a flow table, removing the flow cone, applying a falling impact from a height of 12 mm 15 times, and then measuring the diameter of a spread of the cement mortar. This was evaluated as an initial fluidity. After the cement mortar was allowed to stand for 1 hour, the cement mortar was stirred for 30 seconds by means of the Hobart mixer, and the fluidity was determined in the same manner as described above. This was a fluidity after a lapse of 1 hour.
In the case of the re-emulsifiable aqueous synthetic resin emulsion powder, 50 g of this resin powder was premixed with the cement and the Toyoura standard sand. In this case, the mixing water was used in an amount of 350 g.
The ratio W/C of the water (W) to the cement mortar (C) containing the aqueous synthetic resin emulsion or the re-emulsifiable aqueous synthetic resin emulsion powder was 70%.

Adhesive Strength of Cement Mortar

An ordinary adhesive strength test was performed on the cement mortars in conformity with JIS A6203, and the cement mortars were evaluated on the following basis.

Preparation of Test Samples

A cement mortar base plate (70 × 70 × 20 mm in conformity with JIS R5201) was polished with #150 sandpaper specified in JIS R6252. Then, test cement mortars were each applied onto the base plate in a mold to be molded into a size of 40 × 40 × 10 mm and aged. Thus, test samples were prepared.

Conditions for aging

After the molding, the test samples were each allowed to stand at a temperature of 20 ± 2°C at a relative humidity of 90 % or higher for 48 hours, and then demolded and aged in water at a temperature of 20 ± 2°C for 5 days and further aged at a temperature of 20 ± 2°C at a relative humidity of 60 ± 10 % for 21 days.

The test sample subjected to the aging was immersed in water at a room temperature for 24 hours. Immediately after the test sample was taken out of the water, the wet adhesive strength of the test sample was measured.

A universal testing machine (available from Shimadzu Corporation) was used for the measurement.

Evaluation Criteria

◎: The adhesive strength was not less than 1.5 N/$mm^2$.
○: The adhesive strength was not less than 1.0 N/$mm^2$ and less than 1.5 N/$mm^2$.
Δ : The adhesive strength was not less than 0.8 N/$mm^2$ and less than 1.0 N/$mm^2$.
×: The adhesive strength was less than 0.8 N/$mm^2$.

The evaluation results of the aqueous synthetic resin emulsions and the re-emulsifiable aqueous synthetic resin emulsion powders produced in Examples and Comparative Examples are shown in Tables 1 and 2.

Table 1: Results of Evaluation of Aqueous Synthetic Resin Emulsions (W/C = 70%)

| | Emulsion polymerization stability | Fluidity of mortar | | | Adhesive strength of mortar | |
|---|---|---|---|---|---|---|
| | | Initial fluidity (A) | Fluidity after 1 hour (B) | B/A (%) | Ordinary | Wet |
| Example 1-1 (Emulsion 1) | ○ | 178 | 172 | 96.6 | ◎ | ◎ |
| Example 1-2 (Emulsion 2) | ○ | 181 | 165 | 91.2 | ◎ | ◎ |
| Example 1-3 (Emulsion 3) | ○ | 180 | 162 | 90 | ◎ | ◎ |
| Example 1-4 (Emulsion 4) | ○ | 174 | 166 | 95.4 | ◎ | ◎ |
| Example 1-5 (Emulsion 5) | ○ | 169 | 158 | 93.5 | ◎ | ○ |
| Example 1-6 (Emulsion 6) | ○ | 182 | 173 | 95.1 | ◎ | ◎ |
| Example 1-7 (Emulsion 7) | ○ | 182 | 171 | 94 | ◎ | ◎ |
| Example 1-8 (Emulsion 8) | ○ | 176 | 166 | 97.1 | ◎ | ◎ |

(continued)

| | Emulsion polymerization stability | Fluidity of mortar | | | Adhesive strength of mortar | |
|---|---|---|---|---|---|---|
| | | Initial fluidity (A) | Fluidity after 1 hour (B) | B/A (%) | Ordinary | Wet |
| Example 1-9 (Emulsion 9) | ○ | 195 | 185 | 94.9 | ◎ | ◎ |
| Comparative Example 1-1 (Emulsion 10) | ○ | 175 | 169 | 96.6 | ◎ | Δ |
| Comparative Example 1-2 (Emulsion 11) | ○ | 155 | 147 | 94.8 | ◎ | ○ |
| comparative Example 1-3 | -* | - | - | - | - | - |
| Comparative Example 1-4 (Emulsion 12) | ○ | 180 | 152 | 84.4 | ○ | Δ |
| *: Gelation of emulsion occurred during polymerization. | | | | | | |

Table 2: Results of Evaluation of Re-emulsifiable Aqueous Synthetic Resin Emulsion Powders (W/C = 70%)

| | Re-emulsifiability of resin powder | Fluidity of mortar | | | Adhesive strength of mortar | |
|---|---|---|---|---|---|---|
| | | Initial fluidity (A) | Fluidity after 1 hour (B) | B/A (%) | Ordinary | Wet |
| Example 1-10 (Resin Powder 1) | ○ | 175 | 169 | 96.6 | ◎ | @ |
| Example 1-11 (Resin Powder 2) | ○ | 183 | 170 | 92.9 | ◎ | ◎ |
| Example 1-12 (Resin Powder 3) | ○ | 186 | 167 | 89.8 | ◎ | ◎ |
| Example 1-13 (Resin Powder 4) | ○ | 172 | 163 | 94.8 | ◎ | ◎ |
| Example 1-14 (Resin Powder 5) | ○ | 167 | 154 | 92.2 | ○ | ○ |
| Example 1-15 (Resin Powder 6) | ○ | 179 | 168 | 93.9 | ◎ | ◎ |
| Example 1-16 (Resin Powder 7) | ○ | 180 | 165 | 91.7 | ◎ | ○ |
| Example 1-17 (Resin Powder 8) Example | ○ | 175 | 166 | 94.9 | ◎ | ◎ |

(continued)

| | Re-emulsifiability of resin powder | Fluidity of mortar | | | Adhesive strength of mortar | |
|---|---|---|---|---|---|---|
| | | Initial fluidity (A) | Fluidity after 1 hour (B) | B/A (%) | Ordinary | Wet |
| 1-18 (Resin Powder 9) | ○ | 192 | 180 | 93.8 | ◎ | ◎ |
| Comparative Example 1-5 (Resin Powder 10) | ○ | 177 | 167 | 94.4 | ◎ | Δ |
| Comparative Example 1-6 (Resin Powder 11) | ○ | 160 | 150 | 93.8 | ◎ | ○ |
| Comparative Example 1-7 (Resin Powder 12) | × | 150 | 141 | 94 | × | × |

Where the ratios (W/C) of the water to the cement mortars were 70% (Table 1), the cement mortars of Comparative Examples 1-1 and 1-2 were lower in fluidity than the cement mortars of Examples 1-1 and 1-2. Therefore, the ratios (W/C) of the water to the cement mortars of Comparative Examples 1-1 and 1-2 were increased to 75% by increasing the amount of the water, so that the cement mortars of Comparative Examples 1-1 and 1-2 each have substantially the same fluidity level as the cement mortars of Examples 1-1 and 1-2. Then, the fluidity test and the cement mortar adhesive strength test were performed on these samples.

The evaluation results are shown in Table 3.

Table 3: Results of Evaluation of Aqueous Synthetic Resin Emulsions*

| | Emulsion Polymerization stability | Fluidity of mortar | | | Adhesive strength of mortar | |
|---|---|---|---|---|---|---|
| | | Initial fluidity (A) | Fluidity after 1 hour (B) | B/A(%) | Ordinary | Wet |
| Example 1-1 (Emulsion 1) | ○ | 178 | 172 | 96.6 | ◎ | @ |
| Example 1-2 (Emulsion 2) | ○ | 181 | 165 | 91.2 | ◎ | ◎ |
| Comparative Example 1-1 (Emulsion 10) | ○ | 185 | 170 | 91.9 | ○ | Δ |
| Comparative Example 1-2 (Emulsion 11) | ○ | 176 | 165 | 93.8 | ○ | Δ |
| *: Examples 1-1 and 1-2 (W/C = 70 %)<br>Comparative Examples 1-1 and 1-2 (W/C = 75 %) . | | | | | | |

As can be understood from the above results, Examples were excellent in emulsion polymerization stability, resin powder re-emulsifiability, fluidity, ordinary adhesive strength and wet adhesive strength, and had little variations in properties. Emulsion 5 of Example 1-5, the corresponding Resin Powder 5 of Example 1-14 and Resin Powder 7 of Example 1-16 were slightly lower in adhesive strength, but were satisfactorily usable as the inventive aqueous synthetic resin emulsion and the re-emulsifiable aqueous synthetic resin emulsion powder.

In contrast, Emulsion 10 of Comparative Example 1-1, the corresponding Resin Powder 10 of Comparative Example 1-5 and Emulsion 12 of Comparative Example 1-4 were poorer in wet adhesive strength. Emulsion 11 of

Comparative Example 1-2 and the corresponding Resin Powder 11 of Comparative Example 1-6 were poorer in fluidity and, even with their water contents increased for improvement of the fluidity, were poorer in adhesive strength, failing to exhibit intended properties. Comparative Example 1-3 suffered from gelation during the polymerization, failing to provide an emulsion. Further, Resin Powder 12 of Comparative Example 1-7 was poorer in re-emulsifiability, adhesive strength and fluidity.

Next, Examples of the cationic polymer-containing aqueous emulsion and the cationic polymer-containing aqueous emulsion powder will be described.

Production of Cationic Polymer-Containing Aqueous Emulsions

Example 2-1/Cationic Polymer-Containing Aqueous Emulsion 1

An aqueous synthetic resin emulsion 1' was provided in the same manner as in the production of Example 1-1. More specifically, 670 parts of water and 46 parts of a protective colloid of a PVA having 1, 2-diol bonds on its side chains (having an average polymerization degree of 300, an average saponification degree of about 99.1 mol% and a side chain 1,2-diol bond content of 8 mol%, and available from the Nippon Synthetic Chemical Industry Co., Ltd.), 2 g of sodium acetate and 1g of acidic sodium sulfite were charged in a 2-liter stainless steel reaction vessel provided with a stirrer and a reflux condenser. Then, the reaction vessel was heated to 85˚C to dissolve the PVA in water. In turn, with the temperature of the reaction vessel kept at 80˚C, 66 parts of a monomer mixture preliminarily prepared (358 parts of butyl acrylate/293 parts of methyl methacrylate/6.5 parts of acetoacetoxyethyl methacrylate = 54.4/44.6/1 (weight ratio)) was added to the reaction vessel. Further, 30% of an ammonium persulfate aqueous solution prepared by dissolving 1.6 g of ammonium persulfate in 30 g of water was added as a polymerization initiator to the reaction vessel to cause initial-stage polymerization to proceed for 1 hour. Subsequently, the rest of the monomer mixture and 60% of the ammonium persulfate aqueous solution as the polymerization initiator were added dropwise to the reaction vessel in 4 hours to cause the polymerization to proceed. After completion of the dropwise addition, 10% of the ammonium persulfate aqueous solution was added to the reaction mixture, and the resulting mixture was aged at the same temperature for 1 hour. Thus, the aqueous synthetic resin emulsion 1' was produced, which had a nonvolatile content of 50.1%.

The aqueous synthetic resin emulsion 1' thus produced had a value W of 80 wt% which was calculated from the aforementioned equation (2).

A synthetic resin having a major monomer formulation of butyl acrylate/methyl methacrylate = 358/293 = 55/45 (weight ratio) had a glass transition temperature (Tg) of about -1˚C which was calculated assuming that homopolymers of the respective major monomers have glass transition temperatures Tg of -52˚C and +105˚C.

Then, 5.5 g of a diallyldimethylammonium chloride/acrylamide copolymer (PAS-J-81L having a molecular weight of about 10,000 and available in the form of a 25 % aqueous solution from Nitto Boseki Co., Ltd.) was diluted twice with water, and then added as a water-soluble cationic polymer to 500g of the aqueous synthetic resin emulsion 1' thus produced. In turn, water was further added to the emulsion to provide a cationic polymer-containing emulsion 1 having a nonvolatile content adjusted to 45%.

Example 2-2/Cationic Polymer-Containing Aqueous Emulsion 2

An aqueous synthetic resin emulsion 2' having a nonvolatile content of 49.8 % was produced in substantially the same manner as the aqueous synthetic resin emulsion 1' of Example 2-1, except that the type and the formulation ratio of the monomer mixture was changed to butyl acrylate/styrene/acetoacetoxyethyl methacrylate = 54.4/44.6/1 (weight ratio).

The aqueous synthetic resin emulsion 2' thus produced had a value W of 75 wt% which was calculated from the aforementioned equation (2).

A synthetic resin having a major monomer formulation of butyl acrylate/styrene = 55/45 (weight ratio) had a glass transition temperature (Tg) of about -2˚C which was calculated assuming that homopolymers of the respective major monomers had glass transition temperatures Tg of -52˚C and +100˚C.

Then, 5.5 g of a diallyldimethylammonium chloride/acrylamide copolymer (PAS-J-81 having a molecular weight of about 200,000 and available in the form of a 25 % aqueous solution from Nitto Boseki Co., Ltd.) was diluted twice with water, and then added as a water-soluble cationic polymer to 500g of the aqueous synthetic resin emulsion 2' thus produced. In turn, water was further added to the emulsion to provide a cationic polymer-containing emulsion 2 having a nonvolatile content adjusted to 45%.

Example 2-3/ Cationic Polymer-Containing Aqueous Emulsion 3

An aqueous synthetic resin emulsion 3' having a nonvolatile content of 49.9 % was produced in substantially

the same manner as the aqueous synthetic resin emulsion of Example 2-1, except that the type and the formulation ratio of the monomer mixture was changed to butyl acrylate/methyl methacrylate/glycidyl methacrylate = 54.4/44.6/1 (weight ratio).

The aqueous synthetic resin emulsion 3' thus produced had a value W of 73 wt% which was calculated from the aforementioned equation (2).

A synthetic resin having a major monomer formulation of butyl acrylate/methyl methacrylate = 55/45 (weight ratio) had a calculated glass transition temperature (Tg) of about -1˚C as in the case of the aqueous synthetic resin emulsion 1' of Example 2-1.

Then, 5.5g of the same water-soluble cationic polymer (PAS-J-81L) as used in Example 2-1 was diluted twice with water, and then added to 500g of the aqueous synthetic resin emulsion 3' thus produced. In turn, water was further added to the emulsion to provide a cationic polymer-containing emulsion 3 having a nonvolatile content adjusted to 45%.

Example 2-4/Cationic Polymer-Containing Aqueous Emulsion 4

An aqueous synthetic resin emulsion 4' having a nonvolatile content of 50.2 % was produced in substantially the same manner as the aqueous synthetic resin emulsion of Example 2-1, except that the type and the formulation ratio of the monomer mixture was changed to butyl acrylate/methyl methacrylate/vinyltrimethoxysilane = 54.4/44.6/1 (weight ratio).

The aqueous synthetic resin emulsion 4' thus produced had a value W of 75 wt% which was calculated from the aforementioned equation (2).

A synthetic resin having a major monomer formulation of butyl acrylate/methyl methacrylate = 55/45 (weight ratio) had a calculated glass transition temperature (Tg) of about -1˚C as in the case of the aqueous synthetic resin emulsion 1' of Example 2-1.

Then, 5.5g of the same water-soluble cationic polymer (PAS-J-81L) as used in Example 2-1 was diluted twice with water, and then added to 500g of the aqueous synthetic resin emulsion 4' thus produced. In turn, water was further added to the emulsion to provide a cationic polymer-containing emulsion 4 having a nonvolatile content adjusted to 45%.

Example 2-5/Cationic Polymer-Containing Aqueous Emulsion 5

An aqueous synthetic resin emulsion 5' having a nonvolatile content of 50.1 % was produced in substantially the same manner as the aqueous synthetic resin emulsion of Example 2-1, except that a PVA having 1,2-diol bonds on its side chains (having an average polymerization degree of 300, an average saponification degree of 99.1 mol% and a side chain 1,2-diol bond content of 3 mol%, and available from the Nippon Synthetic Chemical Industry Co., Ltd.) was used as the protective colloid.

The aqueous synthetic resin emulsion 5' thus produced had a value W of 75 wt% which was calculated from the aforementioned equation (2).

A synthetic resin having a major monomer formulation of butyl acrylate/methyl methacrylate = 55/45 (weight ratio) had a calculated glass transition temperature (Tg) of about -1˚C as in the case of the aqueous synthetic resin emulsion 1' of Example 2-1.

Then, 5.5g of the same water-soluble cationic polymer (PAS-J-81L) as used in Example 2-1 was diluted twice with water, and then added to 500g of the aqueous synthetic resin emulsion 5' thus produced. In turn, water was further added to the emulsion to provide a cationic polymer-containing emulsion 5 having a nonvolatile content adjusted to 45%.

Production of Cationic Polymer-Containing Aqueous Emulsion Powder

Example 2-6/Cationic polymer-Containing Aqueous Emulsion Powder 1

First, 31.5 parts of a 20% aqueous solution of a PVA having an average polymerization degree of 500 and an average saponification degree of 88 mol% (GOSENOL GL05 available from the Nippon Synthetic Chemical Industry Co., Ltd.) was added to 200 parts of the cationic polymer-containing aqueous emulsion 1' (having a nonvolatile content of 45%) produced in Example 2-1 (the PVA was added in a proportion of 7% based on the nonvolatile content of the cationic polymer-containing aqueous emulsion). Then, the nonvolatile content was adjusted to 40 % by adding water to the resulting mixture. In the presence of calcium carbonate serving as an anti-caking agent, the mixture was spray-dried in warm air at 140˚C by means of a nozzle type spray drier employing hot air as a heat source. Thus, a cationic polymer-containing aqueous emulsion powder 1 was produced.

Example 2-7/Cationic Polymer-Containing Aqueous Emulsion Powder 2

First, 35 parts of a 20% aqueous solution of a PVA having an average polymerization degree of 500 and an average saponification degree of 88 mol% (GOSENOL GL05 available from the Nippon Synthetic Chemical Industry Co., Ltd.) was added to 200 parts of the aqueous synthetic resin emulsion 1' (having a nonvolatile content of 50.1%) prepared in Example 2-1 before the addition of the water-soluble cationic polymer (the PVA was added in a proportion of 7% based on the nonvolatile content of the aqueous synthetic resin emulsion) Then, the nonvolatile content was adjusted to 40 % by adding water to the resulting mixture. In the presence of calcium carbonate serving as an anti-caking agent, the mixture was spray-dried in warm air at 140˚C by means of a nozzle type spray drier employing hot air as a heat source. Thus, an aqueous synthetic resin emulsion powder 2' was produced.

Then, 3g of a diallyldimethylammonium chloride polymer (Magnafloc 368 having a molecular weight of about 1,000,000 and available in a fine powdery form from Ciba Specialty Chemicals Inc.) was added to 500 g of the aqueous synthetic resin emulsion powder 2' thus produced. Thus, a cationic polymer-containing aqueous emulsion powder 2 was produced.

Example 2-8/Cationic Polymer-Containing Aqueous Emulsion Powder 3

An aqueous synthetic resin emulsion powder 3' was produced in the same manner as in Example 2-7 by employing the aqueous synthetic resin emulsion 3' (having a nonvolatile content of 49.9 %) prepared in Example 2-3 before the addition of the water-soluble cationic polymer.

Then, 3g of the same diallyldimethylammonium chloride polymer (Magnafloc 368) as used in Example 2-7 was added as the water-soluble cationic polymer to 500 g of the aqueous synthetic resin emulsion powder 3' thus produced. Thus, a cationic polymer-containing aqueous emulsion powder 3 was produced.

Example 2-9/Cationic Polymer-Containing Aqueous Emulsion Powder 4

An aqueous synthetic resin emulsion powder 4' was produced in the same manner as in Example 2-7 by employing the aqueous synthetic resin emulsion 4' (having a nonvolatile content of 50.2 %) prepared in Example 2-4 before the addition of the water-soluble cationic polymer.

Then, 5g of the same diallyldimethylammonium chloride polymer (Magnafloc 368) as used in Example 2-7 was added as the water-soluble cationic polymer to 500 g of the aqueous synthetic resin emulsion powder 4' thus produced. Thus, a cationic polymer-containing aqueous emulsion powder 4 was produced.

Example 2-10/Cationic Polymer-Containing Aqueous Emulsion Powder 5

An aqueous synthetic resin emulsion powder 5' was produced in the same manner as in Example 2-7 by employing the aqueous synthetic resin emulsion 5' (having a nonvolatile content of 50.1 %) prepared in Example 2-5 before the addition of the water-soluble cationic polymer.

Then, 3g of the same diallyldimethylammonium chloride polymer (Magnafloc 368) as used in Example 2-7 was added as the water-soluble cationic polymer to 500 g of the aqueous synthetic resin emulsion powder 5' thus produced. Thus, a cationic polymer-containing aqueous emulsion powder 5 was produced.

Examples 2-1 to 2-10 were evaluated in the following manner.

Admixing Stability with Water-Soluble Cationic Polymer

In Examples 2-1 to 2-10, the aqueous synthetic resin emulsions were observed for gelation and the like for evaluation of admixing stability when the water-soluble cationic polymer was added thereto, and the cationic polymer-containing aqueous emulsion powders were each re-emulsified in water in a concentration of 45 % and then evaluated in the re-emulsified state. The following evaluation criteria were employed.

Evaluation Criteria

○: Gelation and other change did not occur.
Δ: Viscosity was slightly increased, but gelation and other change did not occur.
×: Gelation and considerable viscosity increase occurred.

Zeta Potential

The zeta potential was measured by means of ZEECOM IP-120B SYSTEM available from Microtech Nichimen Co., Ltd. The cationic polymer-containing aqueous emulsion powders were each re-emulsified in water before the measurement.

Cement Mortar Fluidity Test

A cement mortar admixing test was performed in conformity with JIS A6203. A cement mortar was prepared by mixing 500 g of an ordinary Portland cement, 1500 g of Toyoura standard sand, 111g of each of the cationic polymer-containing emulsions having a nonvolatile content of 45 % (50 g) and 265 g of mixing water with stirring for 3 minutes by means of a Hobart mixer. The fluidity of the cement mortar was determined by filling the cement mortar in a flow cone having a bottom diameter of 100 mm and set on a flow table, removing the flow cone, applying a falling impact from a height of 12 mm 15 times, and then measuring the diameter of a spread of the cement mortar. This was evaluated as an initial fluidity. After the cement mortar was allowed to stand for 1 hour, the cement mortar was stirred for 30 seconds by means of the Hobart mixer, and the fluidity was determined in the same manner as described above. This was a fluidity after a lapse of 1 hour.
In the case of the cationic polymer-containing aqueous emulsion powder, 50g of the cationic polymer-containing aqueous emulsion powder and 340 g of the mixing water were used for the test.
The ratio W/C of the water (W) to the cement (C) containing the cationic polymer-containing aqueous emulsion was 65%, and the ratio W/C of the water (W) to the cement (C) containing the cationic polymer-containing aqueous emulsion powder was 68%.

Adhesive Strength of Cement Mortar

An ordinary adhesive strength test was performed on the cement mortars in conformity with JIS A6203, and the cement mortars were evaluated in the following criteria.

Preparation of Test Samples

A cement mortar base plate (70 × 70 × 20 mm in conformity with JIS R5201) was polished with #150 sandpaper specified in JIS R6252. Then, test cement mortars were each applied onto the base plate in a mold to be molded into a size of 40 × 40 × 10 mm and aged. Thus, test samples were prepared.

Conditions for Aging

After the molding, the test samples were each allowed to stand at a temperature of 20 + 2°C at a relative humidity of 90 % or higher for 48 hours, and then demolded and aged in water at a temperature of 20 ± 2°C for 5 days and further aged at a temperature of 20 ± 2°C at a relative humidity of 60 ± 10 % for 21 days.
The test sample subjected to the aging was immersed in water at a room temperature for 24 hours. Immediately after the test sample was taken out of the water, the wet adhesive strength of the test sample was measured.
A universal testing machine (available from Shimadzu Corporation) was used for the measurement.

Evaluation Criteria

◎: The adhesive strength was not less than 1.5 $N/mm^2$.
○: The adhesive strength was not less than 1.0 $N/mm^2$ and less than 1.5 $N/mm^2$.
Δ: The adhesive strength was not less than 0.8 $N/mm^2$ and less than 1.0 $N/mm^2$.
×: The adhesive strength was less than 0.8 $N/mm^2$.

The evaluation results are shown in Table 4.

Table 4: Results of Evaluation of Mortar Admixtures

| | Admixing stability of watersoluble cationic polymer | Zeta potential (mV) | Fluidity of mortar *1 | | | Adhesive strength of mortar *1 | |
|---|---|---|---|---|---|---|---|
| | | | Initial fluidity (A) | Fluidity after 1 hour (B) | B/A (%) | Ordinary | Wet |
| Example 2-1 (Cationic polymer containing aqueous emulsion 1) | ○ | 46 | 175 | 171 | 97.7 | ◎ | ◎ |
| Example 2-2 (Cationic polymer containing aqueous emulsion 2) | ○ | 49 | 177 | 168 | 94.9 | ◎ | ◎ |
| Example 2-3 (Cationic polymer containing aqueous emulsion 3) | ○ | 44 | 180 | 168 | 93.3 | ◎ | ◎ |
| Example 2-4 (Cationic polymer containing aqueous emuJsion 4) | ○ | 46 | 174 | 166 | 95.4 | ◎ | ◎ |
| Example 2-5 (Cationic polymer containing aqueous emulsion 5) | ○ | 43 | 193 | 181 | 93.8 | ◎ | ◎ |
| Example 2-6 (Cationic polymer containing aqueous emulsion powder 1) | ○ *2 | 41 *2 | 174 | 161 | 92.5 | ◎ | ◎ |

(continued)

| | Admixing stability of watersoluble cationic polymer | Zeta potential (mV) | Fluidity of mortar *1 | | | Adhesive strength of mortar *1 | |
|---|---|---|---|---|---|---|---|
| | | | Initial fluidity (A) | Fluidity after 1 hour (B) | B/A (%) | Ordinary | Wet |
| Example 2-7 (Cationic polymer containing aqueous emulsion powder 2) | ○ *2 | 42*2 | 180 | 167 | 92.8 | ◎ | ◎ |
| Example 2-8 (Cationic polymer containing aqueous emulsion powder 3) | ○ *2 | 42 *2 | 179 | 169 | 94.4 | ◎ | ◎ |
| Example 2-9 (Cationic polymer containing aqueous emulsion powder 4) | ○ *2 | 50 *2 | 177 | 171 | 96.6 | ◎ | ◎ |
| Example 2-10 (Cationic polymer containing aqueous emulsion powder 5) | ○ *2 | 43 *2 | 188 | 177 | 94.1 | ◎ | ◎ |

*1: Cationic polymercontaining aqueous emulsions (W/C = 65%)
Cationic polymer containing aqueous emulsion powders (W/C = 68%)
*2: Evaluation of 45 % aqueous dispersions of cationic polymer-containing the aqueous emulsion powders

As can be understood from the above results, Examples 2-1 to 2-10 were excellent in admixing stability with the water-soluble cationic polymer, fluidity, ordinary adhesive strength and wet adhesive strength. Further, these examples were excellent in fluidity and adhesive strength with little variations.

The ratio (W/C) of water to the cement containing the cationic polymer-containing aqueous emulsion was low on the order of 65 %. Further, the ratio (W/C) of water to the cement containing the cationic polymer-containing aqueous emulsion powder was low on the order of 68%. Even with such a low water content, the addition of the water-soluble cationic polymer ensures satisfactory fluidity.

INDUSTRIAL APPLICABILITY

Where the aqueous synthetic resin emulsion for the cement mortal admixture or the re-emulsifiable aqueous synthetic resin emulsion powder for the cement mortar admixture according to the present invention is used for the

cement mortar admixture, the cement mortar admixture is highly effective, i.e., entures that the resulting mortar is excellent in fluidity and workability, and has little variations in properties and an improved adhesive strength. The aqueous synthetic resin emulsion and the re-emulsifiable aqueous synthetic resin emulsion powder are very useful as modifiers for repairing mortars, base conditioning materials, self-leveling materials, tile bonding mortars, mortar sealers and primers, mortar curing agents and plaster materials in cement mortar applications. Further, the aqueous synthetic resin emulsion and the re-emulsifiable aqueous synthetic resin emulsion powder are useful for civil engineering and architectural materials, and for glass fiber bonding agents and fire retarders. Further, the cationic polymer-containing aqueous emulsion and the cationic polymer-containing aqueous emulsion powder according to the present invention are usable for adhesives for woody parts, woody materials and paper, for processing agents and inorganic finishing agents for paper and fibers, and for paints, and civil engineering and architectural materials.

## Claims

1. An aqueous synthetic resin emulsion for a cement mortar admixture, comprising a synthetic resin comprising a copolymer of at least one monomer (A) selected from an acrylic monomer and a styrene monomer, and at least one functional group-containing monomer (B) selected from the group consisting of:

    (B1) a glycidyl-containing monomer;
    (B2) an allyl-containing monomer;
    (B3) a hydrolyzable silyl-containing monomer;
    (B4) an acetoacetyl-containing monomer;
    (B5) a monomer having at least two vinyl groups in a molecular structure thereof; and
    (B6) a hydroxyl-containing monomer,

    the synthetic resin being stably dispersed in the emulsion in the presence of a polyvinyl alcohol resin [I] having an average saponification degree of not less than 85 mol% and an average polymerization degree of 50 to 3000 and having 1 to 15 mol% of 1,2-diol bonds on its side chains.

2. An aqueous synthetic resin emulsion for a cement mortar admixture as set forth in claim 1, which is obtained through emulsion polymerization by employing, as a protective colloid agent, a polyvinyl alcohol resin [I] having an average saponification degree of not less than 85 mol% and an average polymerization degree of 50 to 3000 and having 1 to 15 mol% of 1,2-diol bonds on its side chains and employing, as comonomers, at least one monomer (A) selected from an acrylic monomer and a styrene monomer, and at least one functional group-containing monomer (B) selected from the group consisting of:

    (B1) a glycidyl-containing monomer;
    (B2) an allyl-containing monomer;
    (B3) a hydrolyzable silyl-containing monomer;
    (B4) an acetoacetyl-containing monomer;
    (B5) a monomer having at least two vinyl groups in a molecular structure thereof; and
    (B6) a hydroxyl-containing monomer.

3. An aqueous synthetic resin emulsion for a cement mortar admixture as set forth in claim 1 or 2, wherein the functional group-containing monomer (B) is used in a proportion of 0.01 to 10 wt% based on the total monomers.

4. An aqueous synthetic resin emulsion for a cement mortar admixture as set forth in any one of claims 1 to 3, wherein the polyvinyl alcohol resin [I] is used in a proportion of 3 to 20 parts by weight based on 100 parts by weight of the total monomers.

5. An aqueous synthetic resin emulsion for a cement mortar admixture as set forth in any one of claims 1 to 4, further comprising a water-soluble cationic polymer having a molecular weight of 3,000 to 500,000.

6. A re-emulsifiable aqueous synthetic resin emulsion powder for a cement mortar admixture, which is obtained by drying an aqueous synthetic resin emulsion for a cement mortar admixture as recited in any one of claims 1 to 5.

7. A re-emulsifiable aqueous synthetic resin emulsion powder for a cement mortar admixture as set forth in claim 6, which comprises a water-soluble cationic polymer having a molecular weight of 3,000 to 2,000,000.

8. A cement mortar admixture which comprises an aqueous synthetic resin emulsion for a cement mortar admixture as recited any one of claims 1 to 5, or a re-emulsifiable aqueous synthetic resin emulsion powder for a cement mortar admixture as recited in any one of claims 6 and 7.

**Patentansprüche**

1. Wässrige, synthetische Harzemulsion für eine Zementmörtelbeimengung, umfassend ein synthetisches Harz umfassend ein Copolymer von zumindest einem Monomer (A) ausgewählt aus einem Acrylmonomer und einem Styrolmonomer, und zumindest einem eine funktionelle Gruppe enthaltenden Monomer (B), ausgewählt aus der Gruppe, bestehend aus:

   (B1) einem Glycidyl-enthaltenden Monomer;
   (B2) einem Allyl-enthaltenden Monomer;
   (B3) einem hydrolysierbaren Silyl-enthaltenden Monomer;
   (B4) einem Acetoacetyl-enthaltenden Monomer;
   (B5) einem Monomer mit zumindest zwei Vinylgruppen in einer Molekülstruktur davon;
   und
   (B6) einem Hydroxy-enthaltenden Monomer,

   wobei das synthetische Harz stabil in der Emulsion in Gegenwart eines Polyvinylalkoholharzes [I] mit einem durchschnittlichen Verseifungsgrad von nicht weniger als 85 mol-% und einem durchschnittlichen Polymerisationsgrad von 50 bis 3.000 mit 1 bis 15 mol-% 1,2-Diolbindungen auf dessen Seitenketten dispergiert ist.

2. Wässrige, synthetische Harzemulsion für eine Zementmörtelbeimengung gemäß Anspruch 1, welche erhalten wird durch Emulsionspolymerisation durch Anwenden eines Polyvinylalkoholharzes [I] mit einem durchschnittlichen Verseifungsgrad von nicht weniger als 85 mol-% und einem durchschnittlichen Polymerisationsgrad von 50 bis 3.000 mit 1 bis 15 mol-% 1,2-Diolbindungen auf dessen Seitenketten als ein Schutzkoloidmittel und durch Anwenden, als Comonomere, zumindest eines Monomers (A) ausgewählt aus einem Acrylmonomer und einem Styrolmonomer und zumindest eines eine funktionelle Gruppe enthaltenden Monomers (B), ausgewählt aus der Gruppe, bestehend aus:

   ($B_1$) einem Glycidyl-enthaltenden Monomer;
   ($B_2$) einem Allyl-enthaltenden Monomer
   ($B_3$) einem hydrolysierbaren Silyl-enthaltenden Monomer;
   ($B_4$) einem Acetoacetyl-enthaltenden Monomer;
   (B5) einem Monomer mit zumindest zwei Vinylgruppen in einer Molekülstruktur davon;
   und
   (B6) einem Hydroxy-enthaltenden Monomer.

3. Wässrige, synthetische Harzemulsion für eine Zementmörtelbeimengung gemäß Anspruch 1 oder 2, wobei das eine funktionelle Gruppe enthaltende Monomer (B) in einem Anteil von 0,01 bis 10 Gew.-% basierend auf den Gesamtmonomeren verwendet wird.

4. Wässrige, synthetische Harzemulsion für eine Zementmörtelbeimengung gemäß einem der Ansprüche 1 bis 3, wobei das Polyvinylalkoholharz [I] in einem Anteil von 3 bis 20 Gew.- % basierend auf 100 Gew.-% der Gesamtmonomere verwendet wird.

5. Wässrige, synthetische Harzemulsion für eine Zementmörtelbeimengung gemäß einem der Ansprüche 1 bis 4, weiter umfassend ein wasserlösliches kationisches Polymer mit einem Molekulargewicht von 3.000 bis 500.000.

6. Re-emulgierbares, wässriges, synthetisches Harzemulsionspulver für eine Zementmörtelbeimengung, welche durch Trocknen einer wässrigen synthetischen Harzemulsion für eine Zementmörtelbeimengung gemäß einem der Ansprüche bis 5 erhalten wird.

7. Re-emulgierbares, wässriges, synthetisches Harzemulsionspulver für eine Zementmörtelbeimengung gemäß Anspruch 6, welches ein wasserlösliches kationisches Polymer mit einem Molekulargewicht von 3.000 bis 2.000.000 umfasst.

**8.** Zementmörtelbeimengung, welche eine wässrige, synthetische Harzemulsion für eine Zementmörtelbeimengung gemäß einem der Ansprüche 1 bis 5 oder ein re-emulgierbares wässriges, synthetisches Harzemulsionspulver für eine Zementmörtelbeimengung gemäß einem der Ansprüche 6 und 7 umfasst.

**Revendications**

**1.** Émulsion aqueuse de résine synthétique pour un adjuvant de mortier au ciment, comprenant une résine synthétique qui contient un copolymère d'au moins un monomère (A) choisi parmi un monomère acrylique et un monomère styrène et au moins un monomère (B) contenant un groupe fonctionnel choisi parmi le groupe constitué par : (B 1) un monomère contenant un glycidyle,

(B 2) un monomère contenant un allyle,
(B 3) un monomère contenant un silyle hydrolysable,
(B 4) un monomère contenant un acétoacétyle,
(B 5) un monomère comportant au moins deux groupes vinyle dans une de leurs structures moléculaires, 1 et
(B 6) un monomère contenant un hydroxyle,

la résine synthétique étant dispersée de manière stable dans l'émulsion en présence d'une résine de polyalcool de vinyle [I] dont le degré moyen de saponification n'est pas inférieur à 85 de pourcentage molaire, dont le degré moyen de polymérisation est compris entre 50 et 3 000 et dont les chaînes latérales présentent entre 1 et 15 de pourcentage molaire de liaisons 1,2-diol.

**2.** Émulsion aqueuse de résine synthétique pour un adjuvant de mortier au ciment selon la revendication 1, obtenu par polymérisation d'émulsion en utilisant comme agent colloïdal protecteur une résine de polyalcool de vinyle [I] dont le degré moyen de saponification n'est pas inférieur à 85 de pourcentage molaire, dont le degré moyen de polymérisation est compris entre 50 et 3 000 et dont les chaînes latérales présentent entre 1 et 15 de pourcentage molaire de liaisons 1,2-diol et en utilisant comme comonomère au moins un monomère (A) choisi parmi un monomère acrylique, un monomère styrène et au moins un monomère (B) contenant un groupe fonctionnel choisi parmi le groupe constitué par :

(B 1) un monomère contenant un glycidyle,
(B 2) un monomère contenant un allyle,
(B 3) un monomère contenant un silyle hydrolysable,
(B 4) un monomère contenant un acétoacétyle,
(B 5) un monomère comportant au moins deux groupes vinyle dans une de leurs structures moléculaires, et
(B 6) un monomère contenant un hydroxyle.

**3.** Émulsion aqueuse de résine synthétique pour un adjuvant de mortier au ciment selon la revendication 1 ou 2, dans lequel le monomère (B) contenant un groupe fonctionnel est utilisé dans une proportion comprise entre 0,01 et 10 % en poids en se référant à tous les monomères.

**4.** Émulsion aqueuse de résine synthétique pour un adjuvant de mortier au ciment selon une des revendications 1 à 3, dans lequel la résine de polyalcool de vinyle [I] est utilisée dans une proportion de 3 à 20 parties en poids en se référant à 100 parties en poids de tous les monomères.

**5.** Émulsion aqueuse de résine synthétique pour un adjuvant de mortier au ciment selon une des revendications 1 à 4, comportant en outre un polymère cationique soluble dans l'eau dont le poids moléculaire est compris entre 3 000 et 500 000.

**6.** Poudre d'émulsion aqueuse de résine synthétique ré-émulsionnable pour un adjuvant de mortier au ciment, obtenu en séchant une émulsion aqueuse de résine synthétique pour un adjuvant de mortier au ciment selon une des revendications 1 à 5.

**7.** Poudre d'émulsion aqueuse de résine synthétique ré-émulsionnable pour un adjuvant de mortier au ciment selon la revendication 6 comprenant un polymère cationique soluble dans l'eau dont le poids moléculaire est compris entre 3 000 et 2 000 000.

**8.** Adjuvant de mortier au ciment comprenant une émulsion aqueuse de résine synthétique pour un adjuvant de mortier au ciment selon l'une des revendications 1 à 5 ou une poudre d'émulsion aqueuse de résine synthétique ré-émulsionnable selon l'une des revendications 6 et 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006124682 B
- JP 2005330394 B
- JP 2003277419 A
- JP SHO501975155579 A
- JP HEI101998060015 A
- JP SHO581983063706 A
- JP 3225150 B